# EUROPEAN PATENT APPLICATION

(11) **EP 1 955 916 A2**
(43) Date of publication of application: **13.08.2008**
(21) Application number: 08001197.6
(22) Date of filing: 23.01.2008
(51) Int. Cl.: B60W 20/00, B60K 6/52, B60K 6/442, B60R 16/02, B60W 10/06, B60W 10/08, B60W 30/18

(54) **Vehicle drive system and electronic circuit device used for the same**

(30) Priority: 09.02.2007 JP 2007029943
(71) Applicant: Hitachi, Ltd., Chiyoda-ku Tokyo 100-8280 (JP)
(72) Inventor: Kaneko, Satoru, Tokyo 100-8220 (JP); Yamamoto, Tatsuyuki, Tokyo 100-8220 (JP); Suwa, Tokihito, Tokyo 100-8220 (JP); Imura, Shinya, Tokyo 100-8220 (JP)
(74) Representative: Beetz & Partner

(57) **Abstract**

The present invention relates to a further improvement of the running performance of the vehicle. This object can be solved by providing a rollback controller (150) used for controlling the operation of an inverter (400) to control an armature current of the motor (500) in a motor control equipment (120) so that, when a rollback is detected and a rollback speed exceeds a rollback speed limit, the rollback is maintained and the rollback speed is limited by the driving force of the motor (500), with the rollback speed limit value as a target speed recognized.

## Description

### BACKGROUND OF THE INVENTION

### 1. Field of the Invention

The present invention relates to a vehicle drive system and an electronic circuit device used for the same, and typically to a technique for improving the running performance of a vehicle.

### 2. Description of the Related Art

Examples of the related art of improving the running performance of a vehicle include techniques disclosed, for example, in JP-A-2002-58101, JP-A-2006-311644, and JP-A-2006-101642.

JP-A-2002-58101 discloses a motor control technique which sets a motor torque command value to a positive value when the rotational speed of a motor is zero, and gradually increases the motor torque command value in the positive direction as the rotational speed increases in the negative direction. Further, JP-A-2006-311644 discloses a vehicle drive technique for making the motor driving force in the vehicle traveling direction when a rollback is detected larger than that otherwise. It is assumed that these disclosed techniques aim at the hill-hold function for preventing rollback.

JP-A-2006-101642 discloses a control technique for a vehicle which drives either of the front or rear wheels with an internal combustion engine and the other wheels with a motor. With the control technique, if the vehicle is started on an upgrade and the vehicle falls back, and a rollback condition is determined, a target torque of the motor is reduced by a quantity according to the reverse speed of the vehicle until the reverse speed reaches a rollback processing start speed. The technique disclosed in JP-A-2006-101642 aims at restraining the generation of excessive torque for the torque transmission system ranging from the motor to the wheels.

### SUMMARY OF THE INVENTION

Recent years have seen an increase in the number of motor-driven vehicles typified by electric vehicles and hybrid electric vehicles. These automobiles, being capable of reducing or zeroing emissions, are sensitive to the global environment and can make use of the motor driving force in various aspects during vehicle movement utilizing the motor response, thereby improving the vehicle running performance. Like techniques disclosed for example in JP-A-2002-58101, JP-A-2006-311644, and JP-A-2006-101642, the use of the motor driving force for restraining rollback of the vehicle makes it possible to improve the running performance when the vehicle is started on an upgrade.

In order to further generalize motor-driven vehicles continuously, it is necessary to further improve the commodity value of motor-driven vehicles. In order to accomplish this subject, it is necessary to further improve the vehicle running performance in various aspects during vehicle movement, for example, by making use of the motor driving force more effectively in various aspects during vehicle movement as well as optimally controlling the motor drive in various aspects during vehicle movement.

For example, when the vehicle is started on a steep grade, if the vehicle acceleratively rolls back until the brake is released and then the accelerator pedal is depressed and accordingly the rollback speed increases too much, it becomes difficult to extricate the vehicle from the rollback condition. Therefore, as a method of further improving the vehicle running performance, it is contemplated to restrain the acceleration of rollback so as to improve starting characteristics of the vehicle on an upgrade.

A typical object of the present invention provides an electronic circuit device for vehicle drive system, which can further improve the vehicle running performance.

A typical feature of the present invention is to limit the reverse speed if the vehicle rolls back in the direction opposite the vehicle traveling direction and the reverse speed exceeds a rollback limit speed.

In accordance with the typical feature of the present invention, since the reverse speed is limited, it is possible to restrain the accelerative increase in reverse speed, making it easier to extricate the vehicle from the rollback condition.

Further, another typical feature of the present invention, it becomes easier to extricate the vehicle from the rollback condition, thereby improving starting characteristics of the vehicle on an upgrade. Therefore, in accordance with a typical piece of the present invention, the vehicle running performance is improved.

The improvement in the vehicle running performance further improves the commodity value of a vehicle that mounts an electric drive system, thereby contributing to the popularization of such vehicles.

The above mentioned features may be combined in any way, partly or as a whole.

### BRIEF DESCRIPTION OF THE DRAWINGS

Fig. 1 is a plan view showing a configuration of a drive system of a four-wheel drive vehicle according to a first embodiment of the present invention.
Fig. 2 is a block diagram showing a configuration of the electric drive system of Fig. 1.
Fig. 3 is a block diagram showing a configuration of a four-wheel drive control unit provided in an electronic circuit device of the electric drive system of Fig. 1.
Fig. 4 is a block diagram showing a configuration of a motor control unit provided in the electronic circuit device of the electric drive system of Fig. 1.
Fig. 5 is a block diagram showing a configuration of a motor controller included in the motor control unit of Fig. 4.
Fig. 6 is a block diagram showing a configuration of a rollback controller included in the motor controller of Fig. 5.
Fig. 7 is a block diagram showing a configuration of a torque determination unit included in the rollback controller of Fig. 6.
Fig. 8 is a block diagram showing a configuration of an inverter controller included in the motor controller of Fig. 5.
Fig. 9 is a block diagram showing a configuration of a capacitor voltage controller included in the motor controller of Fig. 5.
Fig. 10 is a block diagram showing a configuration of a motor field voltage controller included in the motor controller of Fig. 5.
Fig. 11 is a block diagram showing a configuration of a power generation controller included in the motor control unit of Fig. 4.
Fig. 12 is a flow chart showing an overall flow of four-wheel drive control processing by the electronic circuit device of the electric drive system of Fig. 1.
Fig. 13 is a flow chart showing a flow of motor control processing including rollback speed limit control in the four-wheel drive control processing of Fig. 12.
Fig. 14 is a diagram showing operations of a vehicle at the time of rollback speed limit control of Fig. 13, i.e., operation mode transitions in relation to time, a variation of the wheel speed (rollback speed), and state transitions of the brake and the accelerator.
Fig. 15 is a block diagram showing a configuration of a rollback controller included in a motor controller according to a second embodiment of the present invention.
Fig. 16 is a block diagram showing a configuration of a rollback controller included in a motor controller according to a third embodiment of the present invention.
Fig. 17 is a plan view showing a configuration of a drive system of a four-wheel drive vehicle according to a fourth embodiment of the present invention.

### DETAILED DESCRIPTION OF THE PREFERRED EMBODIMENTS

Embodiments of the present invention will be explained below with reference to the accompanying drawings.

With the following embodiments, a case where the present invention is applied to an electric drive system will be explained below.

An electric drive system to which the present invention is applied can be adopted to other vehicles in addition to automobiles as a drive system. In particular, it is desirable to adopt the electric drive system to a vehicle whose body rolls back in the direction opposite the vehicle traveling direction against the creep torque until the driver releases the brake and then the driver depresses the accelerator pedal.

Here, rollback means a backward movement caused when the vehicle is to advance forward in the traveling direction (with the shift position set to "D" in the case of automatic transmission) or a forward movement caused when the vehicle is to advance backward in the traveling direction (with the shift position set to "R" in the case of automatic transmission). Further, reverse movement may also be referred to as rollback or slide back. In the present description, the term rollback may be used instead of the term reverse movement.

### First Embodiment

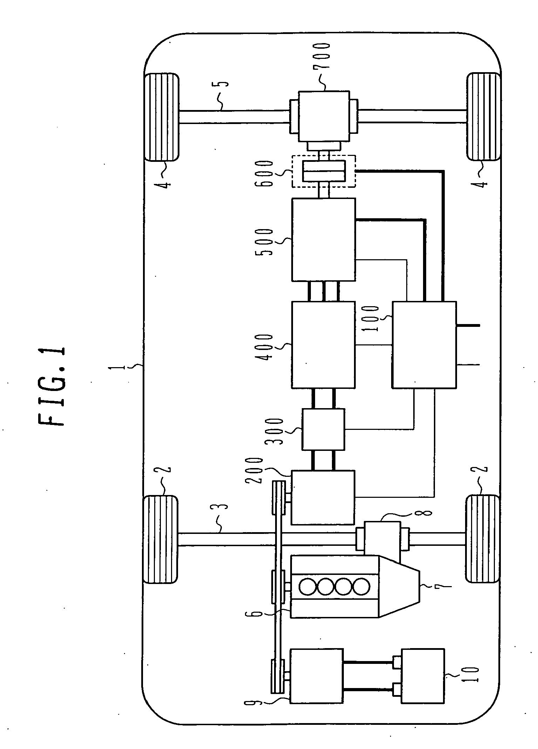

A first embodiment will be explained below with reference to Figs. 1 to 14.

The present embodiment is an example where an electric drive system according to the present invention is adopted to a four-wheel drive hybrid electric vehicle not having a motor drive battery.

First, a configuration of the drive system of the four-wheel drive hybrid electric vehicle not having a motor drive battery will be explained below with reference to Fig. 1.

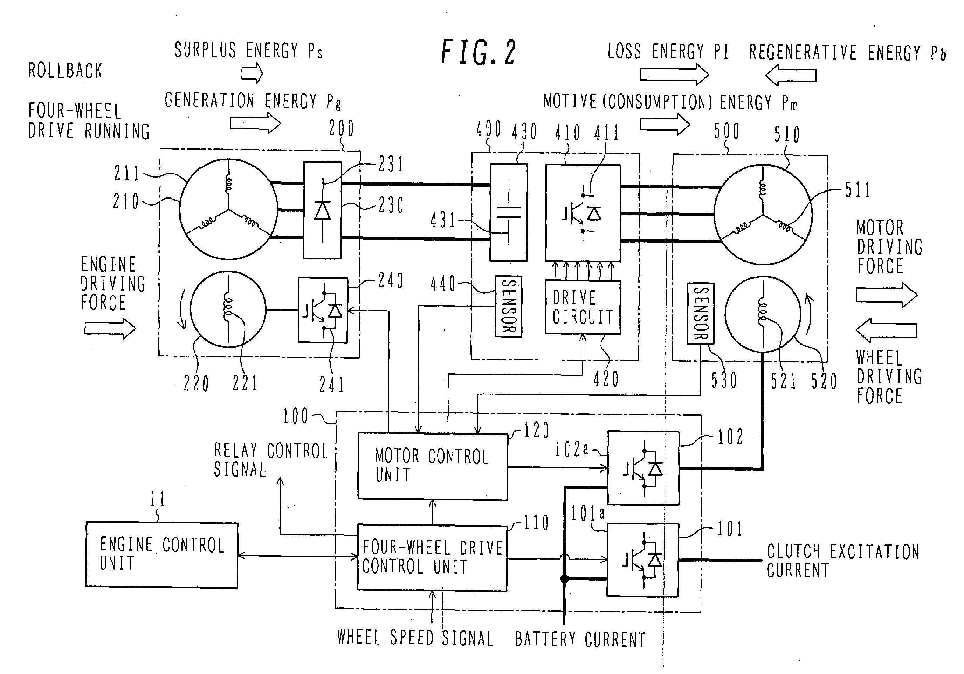

In Fig. 1, control cables for transmitting control signals are drawn with thin solid lines, and electric cables for supplying electric energy are drawn with solid lines thicker than those of control cables. This applies also to Fig. 2 to be mentioned later.

A four-wheel drive hybrid electric vehicle not having a motor drive battery (hereinafter referred to as four-wheel drive vehicle 1) is a hybrid drive vehicle having one drive system driven by an engine 6 and the other drive system driven by a motor 500 such that front wheels 2 (main wheels) are driven by the engine 6 which is an internal combustion engine and rear wheels 4 (follower wheels) by the motor 500 which is a rotary electric machine. The engine 6 is a source of power which forms a primary drive system of the front wheels 2. The engine 6 generates rotating power by heat energy over the entire running region of the vehicle. The motor 500 is a source of power which forms a secondary drive system of the rear wheels 4. The motor 500 generates rotating driving force by electric energy during a time period since the vehicle is started until the running speed region only with the engine 6 is reached and in the case where either front wheel 2 driven by the engine 6 skids on a frozen road or other roads having a small friction coefficient µ of road surface and the power of the engine 6 cannot be transmitted to the road surface.

With the present embodiment, a case where the engine 6 drives the front wheels 2 and the motor 500 drives the rear wheels 4 will be explained below. It may also be possible that the engine 6 drives the rear wheels 4 and the motor 500 drives the front wheels 2.

After being changed by an automatic transmission 7, the rotating power of the engine 6 is transmitted to a drive shaft 3 of the front wheels 2 through a power transmission device 8. Accordingly, the front wheels 2 are driven by the engine 6 over the entire running region of the vehicle.

An in-vehicle auxiliary generator 9 and a drive generator 200 are mechanically connected with the engine 6 through a belt. Both generators are activated by the rotating power of the engine 6 to generate electric power for different uses.

The in-vehicle auxiliary generator 9 forms an in-vehicle 14V power supply and generates DC power for charging an in-vehicle battery 10 having 12V nominal output voltage and DC power for driving in-vehicle auxiliary devices.

The drive generator 200 forms a motor power supply which generates power dedicated for driving the motor 500 as well as an in-vehicle 42V power supply that can output higher power than the in-vehicle auxiliary generator 9. It is possible to vary the output voltage from 0V to 50V or 60V according to driving force that will be requested to the motor 500.

With the present embodiment, a case where the drive generator 200 is provided as a power supply of the motor 500 will be explained below. In this case, since it is not necessary to mount a large-capacity battery dedicated for driving the motor, the space for mounting a secondary drive system of the follower drive wheels (rear wheels 4 with the present embodiment) can be reduced, making it possible to provide a secondary drive system of the follower drive wheels at inexpensive prices in comparison with a mechanical four-wheel drive vehicle which drives the front and rear wheels with engine power.

Further, with the present embodiment, the motor 500 is driven by a low voltage and a large current by use of the drive generator 200 as a power supply. Therefore it is possible to output high torque required by the vehicle running performance and accordingly provide a secondary drive system which compares favorably with a mechanical four-wheel drive vehicle which drives the front and rear wheels with engine power.

The in-vehicle auxiliary generator 9 and the drive generator 200 are arranged in an engine room together with the engine 6. Since the drive generator 200 is a water-cooled enclosed rotary electric machine, the position where the drive generator 200 is attached with respect to the engine 6 can be lower than the position where the in-vehicle auxiliary generator 9 (an air-cooled open type rotary electric machine) with respect to the engine 6.

With the present embodiment, since a motor drive battery is not provided as mentioned above, the DC power outputted from the drive generator 200 is inputted directly to the DC side of an inverter unit 400 through a relay 300. The inverter unit 400 converts the inputted DC power to three-phase AC power necessary to drive the motor 500 and then supplies the converted three-phase AC power to the motor 500. The motor 500 receives the three-phase AC power and generates the rotating power necessary to drive the rear wheels 4.

The rotating power of the motor 500 is transmitted to a drive shaft 5 of the rear wheels 4 through a clutch 600 connected to the output side of the motor 500 and a differential gear 700 connected to the output side of the clutch 600. Therefore, the rear wheels 4 are driven during a time period since the vehicle is started until the running speed region only with the engine 6 is reached and in the case where either front wheel 2 driven by the engine 6 skids on a frozen road or other roads having a small friction coefficient *µ* of road surface and the power of the engine 6 cannot be transmitted to the road surface. Therefore, in accordance with the secondary drive system of the present embodiment, it is possible to start and run the vehicle with high torque with the vehicle stabilized. If either front wheel 2 skids, the front wheel 2 can immediately be gripped, allowing stable secure vehicle running on a road having a small friction coefficient µ .

The differential gear 700 is a power transmission device for distributing the rotating power of the motor 500 to the drive shafts 5 on either side, and a reduction gear for decelerating the rotating power of the motor 500 is integrally formed therein.

The motor 500 and the inverter unit 400, arranged in close vicinity to each other, are provided in a small space under the floor ranging from the vehicle backseat to the trunk room and in the vicinity of the differential gear 700.

With the present embodiment, a case where the motor 500 and the inverter unit 400 are provided separately will be explained below. However, it may be possible to integrate the motor and the inverter unit into one mechatronic unit structure. In this case, it is possible to downsize devices and improve the mounting capability of the vehicle.

Further, it may be possible that the motor 500 be integrated with the clutch 600 and the differential gear 700 to form a unit structure.

The clutch 600 is an electromagnetic power interruption device which has two clutch plates operated by electromagnetic force to control the power transmission. The two clutch plates are engaged so as to transmit the rotating power of the motor 500 to the differential gear 700 during a time period since the vehicle is started until the running speed region only with the engine 6 is reached and in the case where either front wheel 2 driven by the engine 6 skids on a frozen road or other roads having a small friction coefficient µof road surface and the power of the engine 6 cannot be transmitted to the road surface. In a running speed region only with the engine 6, the two clutch plates are disengaged so as to interrupt the transmission of the rotating power from the motor 500 to the differential gear 700.

Operations of each device forming the secondary drive system of the rear wheels 4 is controlled by signals or electric power supplied from an electronic circuit device 100. The electronic circuit device 100 includes: a microcomputer which performs operations necessary to control each device based on a program; a storage unit which prestores a program necessary for microcomputer operations and data such as maps, parameters, etc.; and a plurality of control substrates which mount a plurality of electronic components, such as an integrated circuit (IC) integrating resistors and other circuit elements thereon. The electronic circuit device 100 includes a four-wheel drive control unit, a motor control unit, and chopper circuits.

The electronic circuit device 100 is in charge of field control in which a field current supplied to the drive generator 200 is controlled to control the power generation thereof; relay control in which the drive of a contact of the relay 300 is controlled to control the electrical connection between the drive generator 200 and the inverter unit 400; drive control in which the power conversion operation of the inverter unit 400 is controlled to control the drive of the motor 500; field control in which a field current supplied to the motor 500 is controlled to control the drive of the motor 500; and clutch control in which an excitation current supplied to the clutch 600 is controlled to control the engagement and disengagement of the clutch 600.

Each device forming the secondary drive system of the rear wheels 4 and the electronic circuit device 100 are electrically connected with signal cables or electric cables. The in-vehicle battery 10 and the electronic circuit device 100 are electrically connected with electric cables. Other in-vehicle control units (not shown) and the electronic circuit device 100 are electrically connected with local area network (LAN) cables. Other in-vehicle control units include component devices (throttle valve, suction/exhaust valve, fuel injection valve) of the engine 6, an engine control unit which controls operations of a transmission device forming the transmission 7 and the in-vehicle auxiliary generator 9, an anti-lock brake system control unit which controls operations of a caliper cylinder device forming the anti-lock brake system, etc. Accordingly, possessive information of each in-vehicle control unit can be shared among in-vehicle control units. The electronic circuit device 100 can acquire as input information an engine rotational speed signal, a shift position signal, an accelerator opening signal, and a brake stroke signal from the engine control unit, and a wheel speed signal from the anti-lock brake system control unit when necessary, and use these pieces of input information for above-mentioned control operations of the electronic circuit device 100.

With the present embodiment, a case where operations of the transmission device forming the automatic transmission 7 are controlled by the engine control unit will be explained below. When a vehicle mounts a transmission control unit, operations of the transmission device forming the automatic transmission 7 are controlled by the transmission control unit. In this case, the shift position signal inputted to the electronic circuit device 100 is acquired from the transmission control unit through a LAN cable.

A configuration of the electric drive system forming the secondary drive system of the rear wheels 4 will specifically explained below with reference to Fig. 2.

In Fig. 2, the relay 300 and the clutch 600 are not shown.

The electronic circuit device 100 is composed of the four-wheel drive control unit 110, the motor control unit 120, and the chopper circuits 101 and 102.

With the present embodiment, a case where the four-wheel drive control unit 110, the motor control unit 120, and the chopper circuits 101 and 102 are provided as the electronic circuit device 100 will be explained below. However, it may be possible that all these units are separately provided. It may also be possible that only the four-wheel drive control unit 110 is separately provided and the remaining units as one unit.

Further, with the present embodiment, a case where the electronic circuit device 100 is separately provided from the motor 500 and the inverter unit 400 will be explained below. If the motor 500 and the inverter unit 400 are integrated into one mechatronic unit structure, it may be possible to integrate the electronic circuit device 100 into the unit. In this case, the four-wheel drive control unit 110 may be integrated into the unit together with the motor control unit 120 and the chopper circuits 101 and 102 or separately provided outside the unit. Further, it may be possible to integrate the motor control unit 120 into the inverter unit 400, the chopper circuit 101 into the clutch 600, and the chopper circuit 102 into the motor 500, respectively.

The four-wheel drive control unit 110 inputs as input information the shift position signal and the accelerator opening signal outputted from the engine control unit 11, and the wheel speed signal outputted from the anti-lock brake system control unit. Based on these pieces of input information, the four-wheel drive control unit 110 outputs as output information a motor torque target value signal to the motor control unit 120. Further, based on these pieces of input information, the four-wheel drive control unit 110 outputs as output information a clutch control command signal for driving the clutch 600 to the chopper circuit 101 and a relay control command signal for driving the relay 300 to a drive circuit of the relay 300. Further, the four-wheel drive control unit 110 inputs as input information a rollback setup signal to be mentioned later.

The motor control unit 120 inputs as input information the motor torque target value signal outputted from the four-wheel drive control unit 110, the shift position signal, the accelerator opening signal, the engine rotational speed signal, and a brake stroke information signal outputted from the engine control unit 11, and a motor armature current signal, a motor field current signal, a motor rotation signal, and a capacitor voltage signal (inverter input voltage signal) outputted from sensors 440 and 530 to be mentioned later. Based on these pieces of input information, the motor control unit 120 outputs as output information an inverter control command signal for controlling the drive of the inverter unit 400 to the inverter unit 400, a motor field control command signal for controlling the field current of the motor 500 to the chopper circuit 102, a generator field control command signal for controlling the field current of the drive generator 200 to a voltage regulator 240 of the drive generator 200, and a rollback setup signal for driving the relay 300 and the clutch 600 in response to rollback of the vehicle to the four-wheel drive control unit 110.

Each of the chopper circuits 101 and 102 is a current control unit. This control unit repeats the distribution and interruption of a current supplied from the in-vehicle battery 10 based on command signals outputted from the four-wheel drive control unit 110 and the motor control unit 120 to control an average of an output voltage supplied to a corresponding load (excitation winding or field winding), thereby controlling the current to the corresponding load. The chopper circuits 101 and 102 are composed of switching semiconductor elements 101a and 102a respectively and drive circuits thereof. Here, a field current flowing from the in-vehicle battery 10 to an excitation winding (not shown) of the clutch 600 is controlled by the chopper circuit 101, and a field current flowing from the in-vehicle battery 10 to a field winding 521 of a rotor 520 of the motor 500 is controlled by the chopper circuit 102.

The drive generator 200 is an AC synchronous rotary electric machine which is driven by the driving force of the engine 6 transmitted through a belt and supplies the power required to drive the motor 500 to the inverter unit 400. The driver generator 200 is composed of a stator 210, a rotor 220, a rectifier 230, and a voltage regulator 240.

The stator 210 and the rotor 220 are radially opposed to each other with center axes thereof concentrically arranged.

The stator 210 is an armature which is composed of an armature core (not shown) and armature windings 211 wound therearound.

The rotor 220 is a Rundel-type magnetic field system which is composed of a magnetic pole iron core (not shown) having circumferentially arranged unguiform magnetic poles, one magnetic pole being magnetized to one polarity and another to the other polarity in an alternate manner, and a field winding 221 being wound around the magnetic pole iron core; and rectangular parallelepiped permanent magnets (not shown) provided between adjacent unguiform magnetic poles circumferentially arranged. The permanent magnets are circumferentially magnetized such that the polarity of a circumferential surface of a magnet coincides with the polarity of an unguiform magnetic pole circumferentially opposed thereto.

The rectifier 230 is a converter which rectifies the three-phase AC power outputted from the armature windings 211 to DC power. The rectifier 230 is composed of a three-phase bridge rectifier circuit having three series circuits, each including two diodes 231 electrically connected in series, for three phases electrically connected in parallel (bridge connection).

The voltage regulator 240 is a voltage control unit which controls a field current supplied to the field winding 221 based on command signals outputted from the motor control unit 102 to control the power generation voltage outputted from the drive generator 200. The voltage regulator 240 is composed of a switching semiconductor element 241 and a drive circuit thereof. The field current flowing in the field winding 221 is supplied from the in-vehicle battery 10 at the time of activation of the drive generator 200 (when the generated electrical energy has not reached a predetermined value and a predetermined field current cannot be ensured), or from the output side of the rectifier 230 after activation of the drive generator 200.

When the field current controlled by the voltage regulator 240 flows to the field winding 221 through a power distribution device (not shown) for realizing electrical connection by mechanical slidable contact between a brush and a slip ring, the unguiform magnetic poles are magnetized to corresponding polarities to form a magnetic circuit, such that a magnetic flux generated in the rotor 220 advances from one side of an unguiform magnetic pole, passes through the stator 210, and reaches the other side thereof. When the rotor 220 is rotated by the driving force of the engine 6 in this condition, the magnetic flux outputted from the rotor 220 is interlinked with the armature windings 211 and voltage is induced in each of the three-phase armature windings 211, thereby outputting three-phase AC power from the armature windings 211. The outputted three-phase AC power is rectified to DC power by the rectifier 230 and then supplied to the inverter unit 400.

The inverter unit 400 is a power converter which converts the DC power outputted from the drive generator 200 to three-phase AC power necessary to drive the motor 500 based on command signals outputted from the motor control unit 120 and then supplies the converted three-phase AC power to the motor 500. The inverter unit 400 is composed of a power module 410, a drive circuit 420, a smoothing circuit 430, and a sensor 440.

The power module 410 is a semiconductor circuit device which converts the DC power supplied from the drive generator 200 to three-phase AC power by switching operations of the switching semiconductor elements 411. The power module 400 is composed of a power conversion circuit having three series circuits, each including two switching semiconductor elements 411 electrically connected in series, for three phases electrically connected in parallel (bridge connection); and electrically connected between the drive generator 200 and the motor 500.

The drive circuit 420 generates a drive signal having a capacity and a potential necessary for operation of each of the six switching semiconductor elements 411 based on command signals outputted from the motor control unit 120, i.e., an inverter control command signal associated with each of the six switching semiconductor elements 411, and supplies the generated drive signal to a gate electrode of a corresponding switching semiconductor element 411 to turn it ON or OFF. The drive circuit 420 is composed of an integrated circuit (IC) integrating a plurality of semiconductor elements and other circuit elements forming an amplifier circuit, a potential conversion circuit, etc.

The smoothing circuit 430 eliminates pulsating components contained in the DC power supplied from the drive generator 200 to smooth the DC power to be supplied to the power module 410. The smoothing circuit 430 is composed of a capacitor 431, a capacitive element, and electrically connected in parallel between the DC side of the power module 410 and the output side of the drive generator 200.

The sensor 440 includes a voltage sensor for detecting a capacitor voltage, i.e., a DC voltage applied by the drive generator 200 to the DC side of the power module 410, and a current sensor for detecting a motor armature current supplied from the AC (output) side of the power module 410 to the DC motor 500. The sensor 440 also includes a temperature sensor for detecting the temperature of the power module 410.

Although the voltage and current sensors are collectively shown in Fig. 2, they are provided at respective suitable measurement locations in an asembled product. For example, the current sensor is provided on an output terminal of the power module 410 or a wiring conductor electrically connected thereto.

The motor 500 is a winding field type three-phase AC synchronous rotary electric machine which is driven by the three-phase AC power outputted from the inverter unit 400 to generate rotating power. The motor 500 is composed of a stator 510, a rotor 520, and a sensor 530.

The stator 510 and the rotor 520 are radially opposed to each other with center axes thereof concentrically arranged.

The stator 510 is an armature which is composed of an armature core (not shown) and armature windings 511 wound therearound.

The rotor 520 is a tandem Rundel-type magnetic field system which is composed of axially arranged two magnetic pole iron cores (not shown) having circumferentially arranged unguiform magnetic poles, one magnetic pole being magnetized to one polarity and another to the other polarity in an alternate manner, and a field winding 221 being wound around the magnetic pole iron core; and rectangular parallelepiped permanent magnets (not shown) provided between adjacent unguiform magnetic poles circumferentially arranged. The permanent magnets are circumferentially magnetized such that the polarity of a circumferential surface of a magnet matches the polarity of an unguiform magnetic pole circumferentially opposed thereto.

The sensor 530 is a rotation sensor for detecting a motor field current supplied from the chopper circuit 102 to the field winding 521 and a current sensor for detecting the rotation of the rotor 520. A resolver which outputs two voltages having different phases, which change according to the change of a gap between the rotor and the stator, or a hall sensor including a hall element (magnetic sensitive element) which detects a change of the magnetism of a rotary magnetic member and outputs a corresponding signal is used as the rotation sensor.

Although the current and rotation sensors are collectively shown in Fig. 2, they are provided at respective suitable measurement locations in an assembled product. With the rotation sensor, for example, a rotary member is provided on the rotating shaft of the rotor 520 so as to output a signal in synchronization with the rotation of the rotor 520 and a stationary member is provided at a portion radially opposed to the rotary member.

When a field current controlled by the chopper circuit 102 is supplied to the field winding 521 through the power distribution device (not shown) for realizing electrical connection by mechanical slidable contact between the brush and the slip ring, the unguiform magnetic poles are magnetized to corresponding polarities and a magnetic circuit is formed, such that a magnetic flux generated in the rotor 520 advances from one side of an unguiform magnetic pole, passes through the stator 510, and reaches the other side of the unguiform magnetic pole. On the other hand, when the three-phase AC power outputted from the inverter unit 400 is supplied to the armature winding 511, the stator 510 generates a revolving magnetic field. Magnetic forces (attractive and repulsive forces) act between the stator 510 and the rotor 520 under the revolving magnetic field generated by the stator 510 and the magnetic flux generated by the rotor 520. Accordingly, the rotor 520 rotates and then the rotating power generated by the rotation is outputted to the rear wheels 4.

The electric drive system of the present embodiment is not provided with a motor drive battery as mentioned earlier. Therefore, the electric drive system of the present embodiment can hardly absorb the DC power between the drive generator 200 and the inverter unit 400. Further, the electric drive system of the present embodiment employs current control with d-q axis rotational coordinates, which enables fast-response high-precision torque control, to control the inverter unit 400, and slow-response field current control to control the drive generator 200. Therefore, with the electric drive system of the present embodiment, drive control of the motor 500 and power generation control of the drive generator 200 are cooperatively performed so that the generation energy Pg outputted from the drive generator 200 equals the motive (consumption) energy Pm inputted to the inverter unit 400 and the motor 500. Accordingly, the electric drive system of the present embodiment can prevent overvoltage produced in the capacitor 431 and the switching semiconductor element 411 by surplus power, and torque shortage of the motor 500 produced by voltage drop of the capacitor 431 due to power shortage.

Further, as mentioned above, the electric drive system of the present embodiment can hardly absorb the DC power and therefore basically regenerative operation of the motor 500 cannot be performed. Therefore, the electric drive system of the present embodiment disengages the clutch 600 to interrupt the power transmission between the rear wheels 4 and the motor 500 when the brake of the four-wheel drive vehicle 1 is applied, thereby preventing the motor 500 from being driven based on the driving force of the rear wheels 4. Accordingly, the electric drive system of the present embodiment can prevent the regenerative operation of the motor 500.

However, with the electric drive system of the present embodiment, since the clutch 600 is engaged when the vehicle is started, regenerative operation of the motor 500 may be performed. This applies to a case where the vehicle is started (in forward or reverse direction) on an upgrade (upward slope). Normally, when the driver releases the brake with the "D (drive)" or "R (reverse)" shift position on a flat road or a gentle slope, the front wheels 2 and the rear wheels 4 are driven by the creep torque outputted from the engine 6 and the motor 500 to start the vehicle in the traveling direction. However, on a steep slope (for example, a slope having an inclination of 10% or above), the creep torque decreases due to a component of the force in parallel with the road surface represented by the product of the weight and gravity, and the resistance received from the road surface, resulting in rollback of the vehicle.

When the vehicle undergoes rollback, the motor 500 is driven by the driving force of the rear wheels 4, resulting in reverse rotation (motor rotational speed Nm < 0 rpm). At this time, the motor 500 is controlled by the inverter unit 400 so as to output the creep torque or required torque (motor torque Tm > 0 Nm) associated with the amount at which the driver will depress the accelerator pedal. Therefore, the power of the motor 500 represented by the product of rotational speed and torque of the motor 500 (motor power P=-TnxTm) becomes negative. That is, the motor 500 enters the braking condition.

With a hybrid vehicle having a motor drive battery, when the motor 500 enters the braking condition by rollback, the motor normally operates as a generator (regenerative operation) generating regenerative energy (electric power). The generated regenerative energy is collected (accumulated) into the motor drive battery. However, with the electric drive system of the present embodiment, when the motor 500 is operated as a generator (regenerative operation) to generate regenerative energy Pb, the generated regenerative energy Pb is absorbed by the capacitor 431. However, the amount of absorbed energy is very small because the capacity of the capacitor 431 is far smaller than that of the in-vehicle battery 10. As a result, with the electric drive system of the present embodiment, the voltage of the input (DC) side of the inverter unit 400 abruptly increases due to the generated regenerative energy Pb.

To cope with this, the electric drive system of the present embodiment controls, at the time of rollback, the copper loss of the motor 500 such that the entire regenerative energy Pb to be generated by the motor 500 is consumed as a loss energy P1 of the motor 500. Accordingly, with the electric drive system of the present embodiment, the d-axis current which is a current component in the direction of magnetic flux of the motor 500, i.e., a reactive component of the armature current flowing in the armature winding 511 of the motor 500, is controlled by the inverter unit 400 so that the regenerative energy Pb to be generated by the motor 500 is converted to Joule heat generated from the armature winding 511 of the motor 500. Specifically, at the time of reverse rotation of the motor 500 (when creep torque is generated with negative (positive) wheel speed and when required torque according to the depression amount of the accelerator pedal by the driver is generated), operation of the inverter unit 400 is controlled according to the rollback speed so that a reactive component of the armature current flowing in the armature winding 511 of the motor 500 becomes larger than that at the time of forward rotation of the motor 500 (when creep torque is generated with positive (negative) wheel speed and when required torque is generated under the same conditions (vehicle speed and depression amount of the accelerator pedal by the driver) as those at the time of rollback). Accordingly, even when the motor 500 enters a braking condition at the time of rollback, the electric drive system of the present embodiment can protect the capacitor 431 and the switching semiconductor element 411 from overvoltage without abruptly increasing the voltage of the input (DC) side of the inverter unit 400 due to the regenerative energy Pb to be generated by the motor 500.

Further, if the regenerative energy Pb to be generated by the motor 500 and the loss energy P1 of the motor 500 are equalized, the entire regenerative energy Pb to be generated by the motor 500 theoretically equals the loss energy P1 of the motor 500. However, it is very difficult to constantly equalize the regenerative energy Pb to be generated by the motor 500 and the loss energy P1 of the motor 500 in the presence of disturbance by the rotation of the engine 6, etc. Hence, with the electric drive system of the present embodiment, surplus energy Ps (=P1-Pb) to be lost is supplied from the drive generator 200 to the inverter unit 400 in addition to the creep torque and required torque generated so that the loss energy P1 of the motor 500 becomes larger than the regenerative energy Pb to be generated by the motor 500 at the time of rollback. Accordingly, with the electric drive system of the present embodiment, the loss energy P1 of the motor 500 constantly exceeds the regenerative energy Pb to be generated by the motor 500.

Meanwhile, the electric drive system of the present embodiment compensates the regenerative energy Pb to be generated by the motor 500 only by using the loss energy P1 of the motor 500. Therefore, with the electric drive system of the present embodiment, it may become impossible to compensate the regenerative energy Pb to be generated by the motor 500 only by the loss energy P1 of the motor 500 if the power (braking force) of the motor 500 increases too much at the time of rollback. For example, when the vehicle rolls back on a steep slope having an inclination of about 20% and the driver does not immediately depress the accelerator pedal, the rollback speed increases with increasing negative acceleration. As a result, the rollback speed has become very large when the driver depresses the accelerator pedal. In this case, since large reverse rotational speed of the motor 500 and large torque are necessary to extricate the vehicle from the rollback condition to allow it to climb up the slope, resulting in a very large negative power (braking force) of the motor 500. On the other hand, the inverter unit 400 which controls the drive of the motor 500 is normally provided with a current limitation for failure prevention. Therefore, in the above condition, even if the regenerative energy Pb to be generated by the motor 500 is to be consumed as a loss energy P1 of the motor 500 by increasing a reactive component of the armature current of the motor 500, the reactive component of the armature current of the motor 500 may be increased over the current limitation of the inverter unit 400 depending on the braking condition (magnitude of the braking force) of the motor 500. It is assumed that the regenerative energy Pb to be generated by the motor 500 cannot be made larger than the loss energy P1 of the motor 500, resulting in regeneration.

To avoid this, it is contemplated to increase the capacity of the inverter unit 400, that is, use an inverter unit suitable for large electric power. However, an increase in capacity of the inverter unit 400 leads to an increase in price and capacity, making it impossible to provide a compact electric drive system at inexpensive prices.

Further, to address these drawbacks, it is contemplated to output suitable torque from the motor 500 before the driver depresses the accelerator pedal so that the vehicle may immediately extricate from the rollback condition or the vehicle does not roll back. However, the driver may feel a sense of discomfort by an usual vehicle behavior, for example, the vehicle actually does not roll back.

Further, to output large torque according to the depression amount of the accelerator pedal by the driver in order to extricate the vehicle from the rollback condition to allow it to climb up the slope when the rollback speed (reverse rotational speed of the motor 500) is very high as mentioned above, torsion arises in the output shaft of the motor 500 and, depending on the magnitude of the torsion, drive control of the motor 500 to be subjected by the inverter unit 400 may become unstable, making it impossible to immediately extricate the vehicle from the rollback condition.

Then, with the electric drive system of the present embodiment, the motor control unit 120 is provided with a rollback controller to control the drive of the motor 500 by the inverter unit 400 to limit the rollback speed by means of the driving force of the motor 500 so that the rollback speed may not increase with increasing acceleration.

More specifically, with the electric drive system of the present embodiment, even when the vehicle rolls back on a steep slope having an inclination of about 20%, if the driver depresses the accelerator pedal, a rollback speed which can easily extricate vehicle from the rollback by use of a maximum armature current which can be supplied within the current limitation according to the capacity of the inverter unit 400 and a maximum torque defined by the specifications of the motor 500, or a negative maximum value of a negative wheel speed range corresponding to a maximum torque obtained from a map (data table) showing the relation between the negative wheel speed and the motor torque is set as a rollback speed limit. When creep torque is generated, i.e., when a rollback is detected and the rollback speed exceeds the rollback speed limit (for example, -1 km/h) during a period of time that elapses while the driver releases the brake (OFF) and depresses the accelerator pedal (ON), operations of the inverter unit 400 are controlled to control the armature current of the motor 500 so that the rollback speed is limited by the driving force of the motor 500, with the rollback speed limit as a target speed recognized, with rollback maintained, until the driver depresses the accelerator pedal. As a result, the rollback speed converges toward the rollback speed limit after starting of limit control. After the rollback speed has reached the rollback speed limit, the rollback speed, with repeated fine variations centering on the rollback speed limit, is retained within a rollback speed limit range (for example, -1 km/h ± 0.2 km/h) having the rollback speed limit as a mean value until the driver depresses the accelerator pedal.

With the present embodiment, a case where the rollback speed limit and a rollback speed target value are equalized will be explained below. The absolute value of the rollback speed target value can be smaller than that of the rollback speed limit, which can maintain rollback. In this case, the rollback speed limit range has the rollback speed target value as a mean value.

With the electric drive system of the present embodiment, the above control prevents an increase in the rollback speed of the vehicle with increasing acceleration even on a steep slope. In this case, the regenerative energy Pb to be generated by the motor 500 can be made larger than the loss energy P1 of the motor 500, and therefore it is possible, without causing regeneration, to easily extricate the vehicle from the rollback condition to allow it to climb up the slope. Therefore, in accordance with the electric drive system of the present embodiment, it is possible to improve starting characteristics of the vehicle on an upgrade further improving the vehicle running performance. The improvement in the vehicle running performance further improves the commodity value of a vehicle that mounts an electric drive system, thereby contributing to the popularization of such vehicles.

Further, with the electric drive system of the present embodiment, it is not necessary to increase the capacity of the inverter unit 400 so as to increase the reactive component of the armature current to the motor 500 as mentioned above. Therefore, the electric drive system of the present embodiment does not lead to an increase in size and price of the inverter unit 400.

Further, with the electric drive system of the present embodiment, the rollback speed is limited while the vehicle is rolled back and therefore any unusual vehicle behavior does not occur on a slope that is subject to rollback condition; for example, the vehicle is extricated from the rollback condition before the driver depresses the accelerator pedal or it does not rolls back. Therefore, in accordance with the electric drive system of the present embodiment, it is possible to reduce a sense of driver's discomfort which would otherwise be caused by an unusual vehicle behavior.

Further, with the electric drive system of the present embodiment, the rollback speed is limited while the vehicle is rolled back, and therefore it is possible to make the driver recognize a slope of the road and prompt the driver to immediately depress the accelerator pedal with improved driver's safety.

Further, with the electric drive system of the present embodiment, the rollback speed of the vehicle does not increase with increasing acceleration even on a steep slope, and therefore it is possible to reduce torsion produced in the output shaft of the motor 500 based on the positive torque outputted from the motor 500 which is rotating in reverse according to the depression amount of the accelerator pedal by the driver. Therefore, in accordance with the electric drive system of the present embodiment, the torsion produced in the output shaft of the motor 500 does not increase, and therefore it is possible for the inverter unit 400 to stably control the drive of the motor 500.

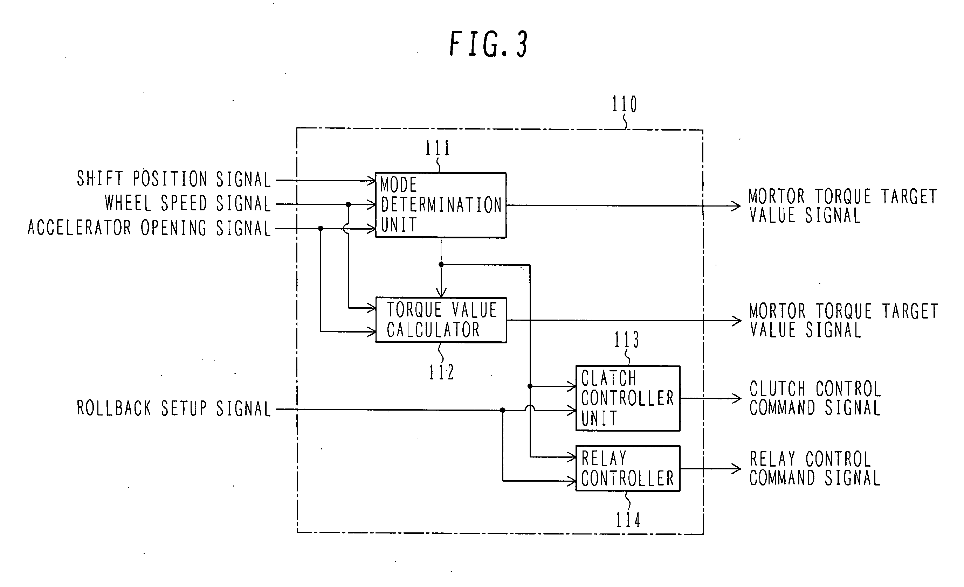

The following explains a configuration for realizing above-mentioned rollback speed limit control with reference to detailed configurations of the four-wheel drive control unit 110 and the motor control unit 120 with reference to Figs. 3 to 11.

Rollback speed limit control is a part of drive control of the motor 500 as mentioned above. Therefore, with the present embodiment, a controller for performing rollback speed limit control is provided in a controller for performing drive control of the motor 500. The motor control unit 120 includes a plurality of controllers.

First, a configuration of the four-wheel drive control unit 110 will be explained below with reference to Fig. 3.

The four-wheel drive control unit 110 inputs as input information the shift position signal, the accelerator opening signal, and wheel speed signal, determines the operation mode based on these pieces of input information, and outputs as output information the motor torque target value signal, the clutch control command signal, and the relay control command signal in response to the determined operation mode. Therefore, the four-wheel drive control unit 110 includes a mode determination unit 111, a torque calculator 112, a clutch controller 113, and a relay controller 114. Further, the four-wheel drive control unit 110 inputs as input information the rollback setup signal to be mentioned later, and outputs as output information the clutch control command signal and the relay control command signal according to the rollback setup signal.

The shift position signal is an output signal from the position sensor provided in the vicinity of the gearshift of the transmission. The four-wheel drive control unit 110 determines whether the gearshift is set to the "D (drive)" or "R (reverse)" shift position based on the output signal from the position sensor in the case of automatic transmission. The accelerator opening signal is an output signal from the opening sensor provided in the vicinity of the accelerator pedal or in a throttle device which controls the air volume supplied to the engine 6. The four-wheel drive control unit 100 determines whether the accelerator opening is ON or OFF, for example, whether the accelerator opening is 2% or more or less than 2% based on the output signal from the opening sensor. The wheel speed signal is an output signal from the speed sensor provided in the vicinity of each of the four wheels. The four-wheel drive control unit 110 calculates an average speed of the four wheels, a front wheels average speed, and a rear wheels average speed based on the output signal from the speed sensor, and determines whether there is a difference between the front and rear wheels average speeds, i.e., whether a skid is detected or not (XES/NO).

The mode determination unit 111 determines the operation mode according to the shift position signal, the accelerator opening signal, and the wheel speed signal. The operation modes include the standby mode, creep mode, four-wheel drive control mode, stop mode, and rotation adjustment mode. The mode determination unit 111 outputs the operation mode signal to the torque calculator 112, the clutch controller 113, and the relay controller 114. Further, when the determined operation mode is the standby mode, creep mode, or stop mode, the mode determination unit 111 outputs as output information the motor torque target value signal associated with the operation mode to the motor control unit 120.

The torque calculator 112 inputs as input information the operation mode signal, the accelerator opening signal, and the wheel speed signal. When the operation mode is the four-wheel drive control mode or rotation adjustment mode, the torque calculator 112 calculates a motor torque target value according to the accelerator opening and a difference between the front and rear wheel speeds by use of maps (data tables) prestored in memory (not shown), i.e., a map showing the relation between the accelerator opening and the motor torque and a map showing the relation between the difference between the front and rear wheel speeds and the motor torque, and outputs as output information the motor torque target value signal to the motor control unit 120. Here, the torque calculator 112 selects the motor torque target value to be outputted according to the operation mode. When the operation mode is the four-wheel drive control mode, the torque calculator 112 outputs the motor torque target value responsive to the accelerator opening, i.e., accelerator-sensitive torque up to a predetermined wheel speed (rear wheel average speed) by use of the map showing the relation between the accelerator opening and the motor torque. When the operation mode is the rotation adjustment mode, the torque calculator 112 outputs the motor torque target value according to the difference between the front and rear wheel speeds, i.e., torque sensitive to the difference between the front and rear wheel speeds within a range of a predetermined wheel speed (difference between the front and rear wheel average speeds) by use of the map showing the relation between the difference between the front and rear wheel speeds and the motor torque.

The clutch controller 113 inputs as input information the operation mode signal, and outputs as output information the clutch control command signal (ON/OFF command) for driving the clutch 600 to the chopper circuit 101. The clutch controller 113 outputs the clutch control command signal (OFF) when the operation mode is the stop mode, and outputs the clutch control command signal (ON) when another operation mode is selected or when the rollback setup signal is inputted.

The relay controller 114 inputs as input information the operation mode signal, and outputs as output information the relay control command signal (ON/OFF command) for driving the relay 300 to the drive circuit of relay 300. The relay controller 114 outputs the relay control command signal (OFF) when the operation mode is the stop mode, and outputs the relay control command signal (ON) when another operation mode is selected or when the rollback setup signal is inputted.

The following summarizes (a) operation mode determination condition, (b) motor torque target value [N-m], and (c) clutch and relay operations (ON/OFF) associated with each operation mode. Further, for (a) operation mode determination condition, conditions (1) to (4) are as follows: (1) Shift position (D or R and others), (2) Accelerator opening (ON/OFF), (3) Skid (YES/NO), and (4) Wheel speed [km/h].

### - Standby mode

(a)
   (1) D or R
   (2) OFF
   (3) NO
   (4) V_{w}= 0
(b) Tₘₜ=T₁
(c) ON

For example, T₁ is smaller than 1 [N-m].

### - Creep mode

(a)
   (1) D or R
   (2) OFF
   (3) NO
   (4)Vw>0
(b) Tₘₜ=T₂ (T₁<T₂)
(c) ON

### - Four-wheel drive control mode

(a)
   (1) D or R
   (2) ON
   (3) NO
   (4) 0<V_{w}<V_{w1}
(b) Tₘₜ=T₃ (T₂<T₃)
(c) ON

T₃ is continued until V_{w} reaches or exceeds V_{w1}. V_{w1} is a speed at which the drive of the rear wheels 4 by the motor 500 is stopped from a condition where the drive of the motor 500 is controlled according to the motor torque target value (accelerator-sensitive torque) responsive to the accelerator opening (the speed at which the vehicle is driven only with the engine 6 from a condition where the vehicle is driven by the engine 6 and the motor 500) and the rear wheels 4 are driven. V_{w1} is lower than an upper limit value V_{wmax} of a speed range at which the rear wheels 4 are allowed to be driven by the motor 500.

Further, in the four-wheel drive control mode, when a predetermined period of time has elapsed since V_{w} reaches or exceeds V_{w1} or when the accelerator is turned OFF while the wheel speed satisfies 0<V_{w}<V_{w1}, Tₘₜ is linearly decreased from T₃ to T₁.

### - Rotation adjustment mode

(a)
   (1) D or R
   (2) ON
   (3) YES
   (4) 0<V_{w}<V_{wmax} and ΔV_{w1}<ΔV_{w}≤ΔV_{w2}
(b) 0<Tₘ≤T₄ (T₃<T₄)
(c) ON

For example, ΔV_{w1} and ΔV_{w2} are larger than 0 and smaller than 1O km/h.

Further, in the rotation adjustment mode, when a predetermined period of time has elapsed since ΔV_{w} falls to or below ΔV_{w1} or when the accelerator is turned OFF while the wheel speed difference satisfies ΔV_{w1}<ΔV_{w}≤ΔV_{w2}, the four-wheel drive control mode is entered and then Tₘₜ to be determined under the condition of the four-wheel drive control mode is outputted.

### - Stop mode

(a)
   (1) D or R
   (2) ON/OFF
   (3) NO
   (4) V_{w} ≥ 0<V_{w}≤V_{w1}
(b) Tₘ=0
(c) OFF

When a predetermined period of time has elapsed since Tₘₜ reaches T₁ in the four-wheel drive control mode, Tₘₜ is changed from T₁ to 0.

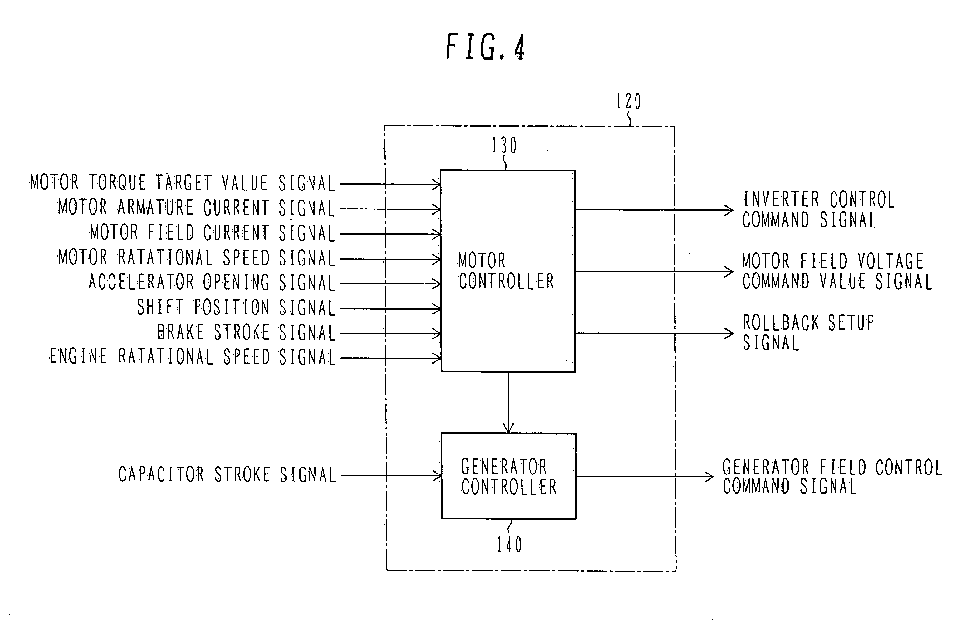

A configuration of the motor control unit 120 will be explained below with reference to Figs. 4 to 11.

The motor control unit 120, as shown in Fig. 4, inputs as input information the motor torque target value signal, the motor armature current signal, the motor field current signal, the motor.rotation signal, the accelerator opening signal, engine rotational speed signal, the brake stroke signal, the shift position signal, and the capacitor voltage signal. The motor control unit 120 performs an operation for controlling the drive of the motor 500 and an operation for controlling the power generation of the drive generator 200. The motor control unit 120 outputs as output information the inverter control command signal, the motor field control command signal, the rollback setup signal, and the generator field control command signal to each device or each circuit. Therefore, the motor control unit 120 includes a motor controller 130 and a power generation controller 140.

The shift position signal and the accelerator opening signal are output signals from the position sensor and the opening sensor as mentioned above. As mentioned above, the motor control unit 120 determines whether the gearshift is set to the "D (drive)" or "R (reverse)" position based on the output signal from the position sensor, and whether the accelerator opening is ON or OFF based on the output signal from the opening sensor. The brake stroke signal is an output signal from the brake sensor provided in the vicinity of the brake pedal. The motor control unit 120 determines whether the brake is ON or OFF based on the output signal from the brake sensor. The engine rotational speed signal is an output signal from the rotation sensor provided in the engine 6 or the engine control unit 11. The motor control unit 120 calculates the rotational speed of the drive generator 200 based on the output signal from the rotation sensor or the engine control unit 11. The motor torque target value signal is an output signal from the four-wheel drive control unit 110.

The motor armature current signal is an output signal of the current sensor provided on the output (AC) side of the inverter unit 400. The capacitor voltage signal is an output signal from the voltage sensor provided on the input (DC) side of the inverter unit 400. The motor field current signal is an output signal from the current sensor provided in the motor 500. The motor rotation signal is an output signal from the rotation sensor provided in the motor 500. The motor control unit 120 detects the motor armature current, the capacitor voltage, the motor field current, the motor rotational speed, and the motor rotational speed based on these output signals.

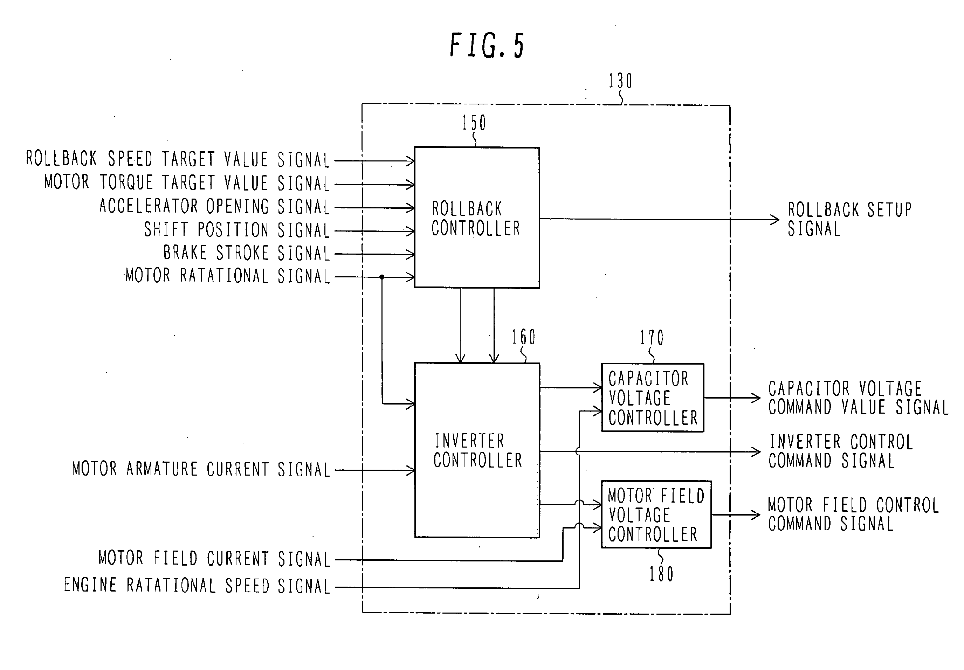

The motor controller 130, as shown in Fig. 5, inputs as input information the motor torque target value signal, the motor armature current signal, the motor field current signal, the motor rotation signal, the accelerator opening signal, the shift position signal, the brake stroke signal, and the engine rotational speed signal. The motor controller 130 performs an operation for controlling the armature current of the motor 500, an operation for controlling the field current of the motor 500, and an operation for controlling the field current of the drive generator 200 cooperatively with the required electric power on the side of the motor 500. The motor controller 130 outputs as output information the inverter control command signal, the motor field voltage command value signal, the capacitor voltage command value signal, and the rollback setup signal to each device, each circuit, and other controllers. Therefore, the motor controller 130 includes a rollback controller 150, an inverter controller 160, a capacitor voltage controller 170, and a motor field voltage controller 180.

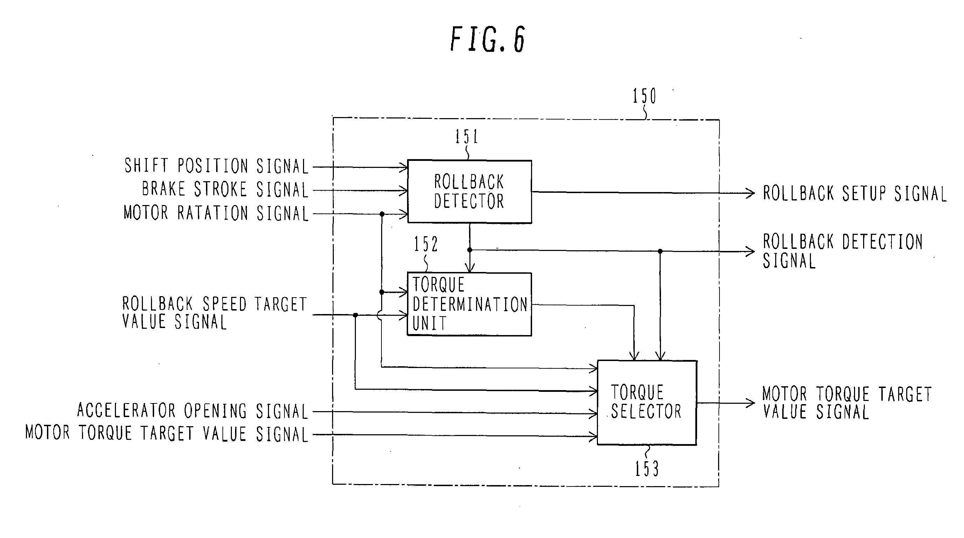

The rollback controller 150, as shown in Fig. 6, input as input information the motor torque target value signal, the motor rotation signal, the accelerator opening signal, the shift position signal, the brake stroke signal, and the rollback target speed signal. The rollback controller 150 performs detection of rollback, detection of previous condition of rollback, an operation for controlling the rollback speed, and selection of the motor torque target value. The rollback controller 150 outputs as output information the rollback setup signal, the rollback detection signal, and the motor torque target value signal to each device, each circuit, and other controllers. Therefore, the rollback controller 150 includes a rollback detector 151, a torque determination unit 152, and a torque selector 153.

The rollback speed target value is prestored in memory (not shown) provided in the motor control unit 120, which is a rollback speed limit for limiting the rollback speed as mentioned above.

The rollback detector 151 inputs as input information the shift position signal, the brake stroke signal, and the motor rotation signal, and performs detection of previous condition of the rollback and detection of rollback. Here, when the gearshift is set to the "D" or "R" position based on the shift position signal and the brake pedal is ON based on the brake stroke signal, the rollback detector 151 determines the previous condition of rollback is established and outputs as output information the rollback setup signal to the clutch controller 113 and the relay controller 114. Further, when the motor rotational speed is negative based on the motor rotation signal and the gearshift position is "D" based on the shift position signal, or when the motor rotational speed is positive based on the motor rotation signal and the gearshift position is "R" based on the shift position signal, the rollback detector 151 determines rollback condition is established, and outputs the rollback detection signal as output information to the inverter controller 160, the torque determination unit 152, and the torque selector 153 to be mentioned later.

With the present embodiment, the rollback detector 151 outputs the rollback setup signal to the clutch controller 113 and the relay controller 114 as mentioned above. The control logic is formed such that, the clutch 600 and relay 300 are turned ON in the standby mode determined by the four-wheel drive control unit 110, and turned OFF when a predetermined period of time has elapsed. Therefore, with the present embodiment, the ON condition of the clutch 600 and the relay 300 is continued by outputting the rollback setup signal. Such control is effective when the four-wheel drive control unit 110 and the motor control unit 120 are separately provided.

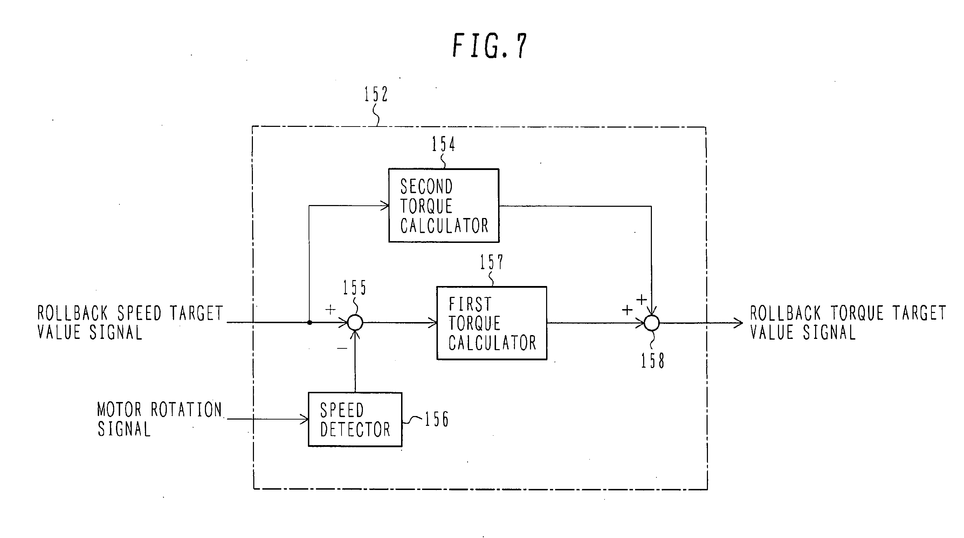

The torque determination unit 152, as shown in Fig. 7, inputs as input information the motor rotation signal, the rollback speed target value signal, and the rollback detection signal. The torque determination unit 152 limits the rollback speed, recognizing the rollback speed target value as a target speed when the vehicle is in the rollback condition and the rollback speed exceeds the rollback speed target value, calculates a rollback torque target value for averagely holding the rollback speed in the vicinity of the rollback speed target value, and outputs as output information the rollback torque target value signal to the torque selector 153. Therefore, the torque determination unit 152 includes a subtracter 155, an adder 158, a speed detector 156, and first and second torque calculators 154 and 157. The torque determination unit 152 is activated by an input of the rollback detection signal.

The speed detector 156 inputs as input information the motor rotation signal, detects a rollback speed from the rotational speed of the motor 500, and outputs as output information the rollback speed signal to the subtracter 155.

In accordance with the present embodiment, the rollback speed is detected based on the motor rotation which can be detected with high precision and therefore the rollback speed can be detected from very low speed regions.

The subtracter 155 inputs as input information the rollback speed target value signal and the rollback speed signal, calculates the rollback speed difference value, i.e., a difference between the rollback speed target value and the rollback speed, and outputs as output information the rollback speed difference signal to the first torque calculator 157.

The second torque calculator 154 inputs as input information the rollback speed target value signal. The second torque calculator 154 calculates the rollback torque target value according to the rollback speed target value by use of a map (data table) prestored in memory (not shown), i.e., a map showing the relation between the rollback speed target value and the rollback speed target value necessary for the vehicle to roll back at the rollback speed target value, and outputs as output information the second rollback torque target value signal to the adder 158.

The first torque calculator 157 is a proportional-integral operator which inputs as input information the rollback speed difference signal. The first torque calculator 157 calculates the rollback torque target value by subjecting the rollback speed difference value to proportional-integral operation such that the rollback speed coincides with the rollback speed target value (rollback speed limit), and outputs as output information the first rollback torque target value signal to the adder 158.

The adder 158 inputs as input information the first and second rollback torque target value signals, calculates the rollback torque target value which is a sum of the first and second rollback torque target values, and outputs as output information the rollback torque target value signal to the torque selector 153.

In accordance with the present embodiment, a feedforward control system performed by the second torque calculator 154 is provided in parallel with a feedback control system performed by the first torque calculator 157, and therefore it is possible to stabilize output characteristics of the rollback torque target value.

The rollback torque becomes larger than torque having been outputted from the motor 500, i.e., creep torque, before the rollback speed exceeds the rollback speed limit (rollback speed target value). In this case, it is desirable to make the active component (q-axis current) of the armature current of the motor 500 (when the rollback speed is limited) larger than the active component (q-axis current) of the armature current of the motor 500 before the rollback speed exceeds the rollback speed limit (rollback speed target value).

The torque selector 153 inputs as input information the accelerator opening signal, the motor rotation signal, the rollback target speed signal, the motor torque target value signal, the rollback torque target value signal, and the rollback detection signal. The torque selector 153 selects either the motor torque target value signal from the four-wheel drive control unit 110 or the rollback torque target value signal from the torque determination unit 152. If the torque selector 153 determines that the rollback speed "exceeds" the rollback target speed based on the rollback target speed signal and the motor rotation signal, the accelerator is "OFF" based on the accelerator opening signal, and a rollback is detected based on the rollback detection signal, the torque selector 153 selects the rollback torque target value signal outputted from the torque determination unit 152 and outputs it as the motor torque target value signal until the accelerator is judged to be "ON" based on the accelerator opening signal. Otherwise, the torque selector 153 outputs the motor torque target value signal outputted from the four-wheel drive control unit 110.

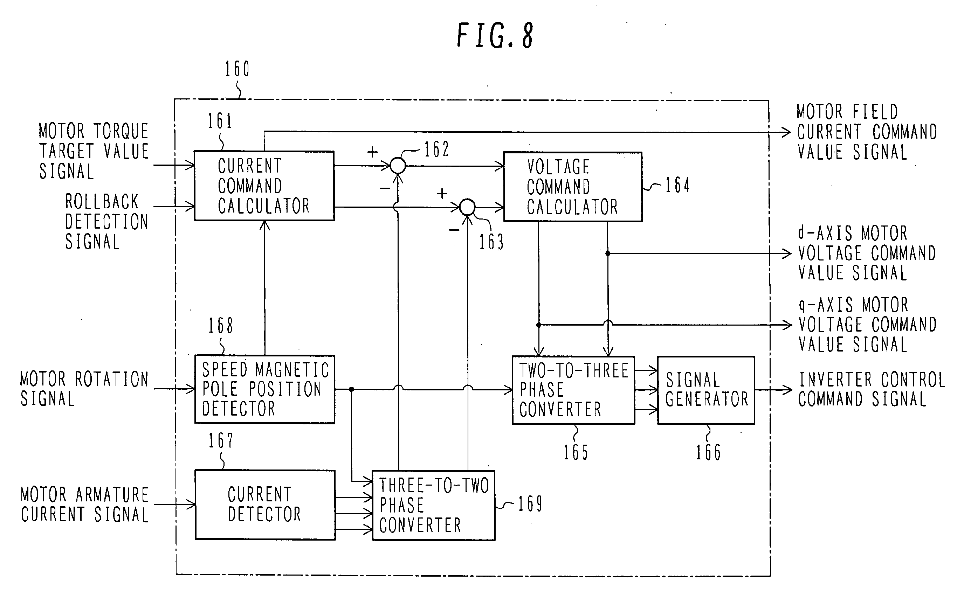

The inverter controller 160, as shown in Fig. 8, inputs as input information the motor torque target value signal, the rollback detection signal, the motor rotation signal, and the motor armature current signal. The inverter controller 160 performs an operation for controlling the inverter unit 400 to control the armature current of the motor 500, an operation for controlling the drive generator 200, and an operation for controlling the field current of the motor 500. The inverter controller 160 outputs as output information the inverter control command signal, the d-axis motor voltage command value signal, the q-axis motor voltage command value signal, and the motor field current command value signal to each device, each circuit, and other controllers. Therefore, the inverter controller 160 includes a speed and magnetic pole position detector 168, a current detector 167, a three-to-two phase converter 169, a current command calculator 161, a voltage command calculator 164, subtracters 162 and 163, a two-to-three phase converter 165, and a signal generator 166.

The speed and magnetic pole position detector 168 inputs as input information the motor rotation signal. The speed and magnetic pole position detector 168 detects the motor rotational speed and the magnetic pole position of the rotor 520 of the motor 500, and outputs as output information the motor rotational speed signal to the current command calculator 161, and the motor magnetic pole position signal to the two-to-three phase converter 165 and the three-to-two phase converter 169.

The current detector 167 inputs as input information the motor armature current signal, detects the motor armature current value (for three phases), and outputs as output information the u-, v-, and w-phase motor armature current signals to the three-to-two phase converter 169.

The three-to-two phase converter 169 inputs as input information the motor magnetic pole position signal and the u-, v-, and w-phase motor armature current signals, converts the u-, v-, and w-phase motor armature currents to d-axis and q-axis currents based on the motor magnetic pole position, and outputs as output information the d-axis current signal to the subtracter 162 and the q-axis current signal to the subtracter 163.

The current command calculator 161 inputs as input information the motor torque target value signal, the motor rotational speed signal, and the rollback detection signal. The current command calculator 161 calculates the d-axis current command value, the q-axis current command value, and the motor field current command value, and outputs as output information the d-axis current command value signal to the subtracter 162, the q-axis current command value signal to the subtracter 163, and the motor field current command value signal to the motor field voltage controller 180. When the d-axis current command value, the q-axis current command value, and the motor field current command value are calculated, maps (data tables) prestored in memory (not shown) are used. That is, the current command calculator 161 calculates the d-axis current command value by use of a map showing the relation between the motor torque target value, the motor rotational speed, and the d-axis current command value, the q-axis current command value by use of a map showing the relation between the motor torque target value, the motor rotational speed, and the q-axis current command value, and the motor field current command value by use of a map showing the relation between the motor torque target value, the motor rotational speed, and the motor field current command value.

Here, the current command calculator 161 includes a d-axis and q-axis current command value map used at the time of normal four-wheel drive control and a d-axis and q-axis current command value map used when rollback occurs. The current command calculator 161 selects either of the two different d-axis and q-axis current command value maps according to whether a rollback is detected or not which is determined based on the rollback detection signal. That is, with the present embodiment, at the time of rollback, the reactive component of the armature current (d-axis current) of the motor 500 is made larger than that at the time of normal four-wheel drive control, as mentioned above, so that the regenerative energy that the motor 500 will generate at the time of rollback is consumed as a loss (copper loss) of the motor 500. Therefore, with the present embodiment, either of the two different d-axis and q-axis current command value maps is selected according to whether a rollback is detected or not.

Further, the motor field current command value is set according to the rotational speed of the motor 500 because induced voltage of the motor 500 increases with increasing rotational speed thereof. Therefore, the present embodiment has characteristics that the motor field current command value is decreased as the rotational speed of the motor 500 increases. Further, with the present embodiment, the motor field current command value can be set according to the motor torque target value, allowing the field current supplied to the field winding 511 of the motor 500 to be changed according to the motor torque target value. Changing the field current of the motor 500 according to the magnitude of motor torque target value is able to improve the efficiency of the motor 500 with respect to a constant field current.

The subtracter 162 inputs as input information the d-axis current command value signal and the d-axis current signal, calculates the d-axis current difference, i.e., a difference between the d-axis current command value and the d-axis current, and outputs as output information the d-axis current difference signal to the voltage command calculator 164.

The subtracter 163 inputs as input information the q-axis current command value signal and the q-axis current signal, calculates the q-axis current difference, i.e., a difference between the q-axis current command value and the q-axis current, and outputs as output information the q-axis current difference signal to the voltage command calculator 164.

The voltage command calculator 164 is a proportional-integral operator which inputs as input information the d-axis current difference signal and the q-axis current difference signal. The voltage command calculator 164 calculates each of the d-axis voltage command value and the q-axis voltage command value by subjecting each of the d-axis current difference value and the q-axis current difference value to proportional-integral operation such that the d-axis current coincides with the d-axis current command value and the q-axis current coincides with the q-axis current command value, and outputs as output information the d-axis and q-axis voltage command value signals to the two-to-three phase converter 165.

The two-to-three phase converter 165 inputs as input information the d-axis voltage command value signal, the q-axis voltage command value signal, and the motor magnetic pole position signal, converts the d-axis voltage command value and the q-axis voltage command value to u-, v-, and w-phase voltage command values based on the motor magnetic pole position, and outputs as output information the u-, v-, and w-phase voltage command value signals to the signal generator 166.

The signal generator 166 inputs as input information the u-, v-, and w-phase voltage command value signals, calculates six inverter control commands associated with each arm (each switching semiconductor element 411) of the inverter unit 400 according to u-, v-, and w-phase voltage command values, and outputs as output information the six inverter command signals (pulse waveforms) to the drive circuit 420 of the inverter unit 400.

The present embodiment adopts rectangular waveform control and PWM (pulse width modulation) control for a switching control method of the inverter unit 400, and either of rectangular waveform control and PWM control is selected in response to the operating point (rotational speed) of the motor 500. For example, when the vehicle is in a stop, starting, or running at low speeds (with motor rotational speed less than 5000 rpm, for example), PWM control is used, and when the vehicle is running at middle or high speeds (with motor rotational speed of 5000 rpm or more, for example), rectangular waveform control is used. Therefore, with the present embodiment, one pulse waveform (for a half period of the sine fundamental wave) is outputted from the signal generator 166 for rectangular waveform control, and a plurality of pulse-width-modulated pulse waveforms (for a half period of the sine fundamental wave) are outputted from the signal generator 166 for PWM control.

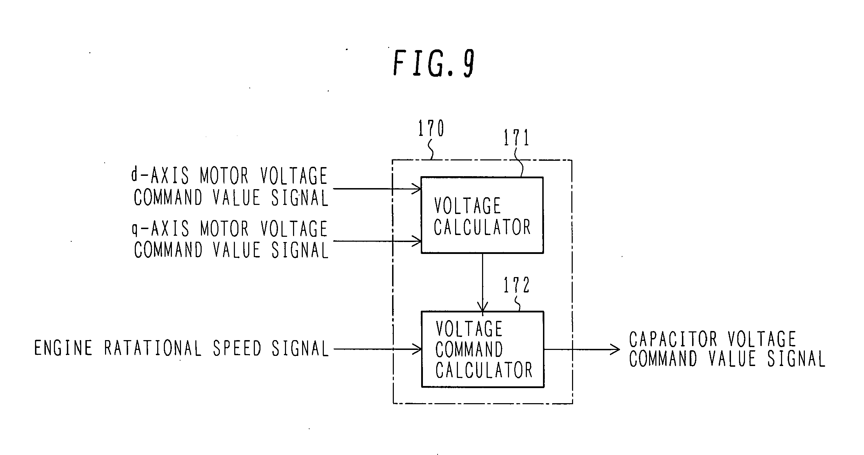

The capacitor voltage controller 170, as shown in Fig. 9, inputs as input information the engine rotational speed signal, the d-axis motor voltage command value signal, and q-axis motor voltage command value signal. The capacitor voltage controller 170 performs an operation for controlling the field current to be supplied to the drive generator 200 cooperatively with the required power on the side of the motor 500, and outputs as output information the capacitor voltage command value signal to the power generation controller 140. Therefore, the capacitor voltage controller 170 includes a voltage calculator 171 and a voltage command calculator 172.

The voltage calculator 171 inputs as input information the d-axis motor voltage command value signal and the q-axis motor voltage command value signal. The voltage calculator 171 calculates the phase voltage of the motor 500 with a predetermined formula based on the d-axis motor voltage command value and the q-axis motor voltage command value and calculates the capacitor voltage (output voltage of the drive generator 200) with the predetermined formula based on the phase voltage, and outputs as output information the capacitor voltage signal to the voltage command calculator 172.

The voltage command calculator 172 inputs as input information the capacitor voltage signal and the engine rotational speed signal. The voltage command calculator 172 calculates the output current of the drive generator 200 according to the engine rotational speed (rotational speed of the drive generator 200) and the capacitor voltage by use of a map (data table) prestored in memory (not shown), i.e., a power generation characteristic map (showing the relation between the output voltage and the output current) of the drive generator 200 according to the rotational speed of the drive generator 200. The voltage command calculator 172 determines whether the power required of the motor 500 can be outputted from the motor 500 when the motor 500 is driven by the calculated output voltage (capacitor voltage) and output current of the drive generator 200. When the voltage command calculator 172 determines that the power required of the motor 500 can be outputted from the motor 500, it recalculates a capacitor voltage allowing the motor 500 and the drive generator 200 to operate most efficiently, and, recognizing the calculated value as the capacitor voltage command value, outputs as output information the capacitor voltage command value signal to the power generation controller 140.

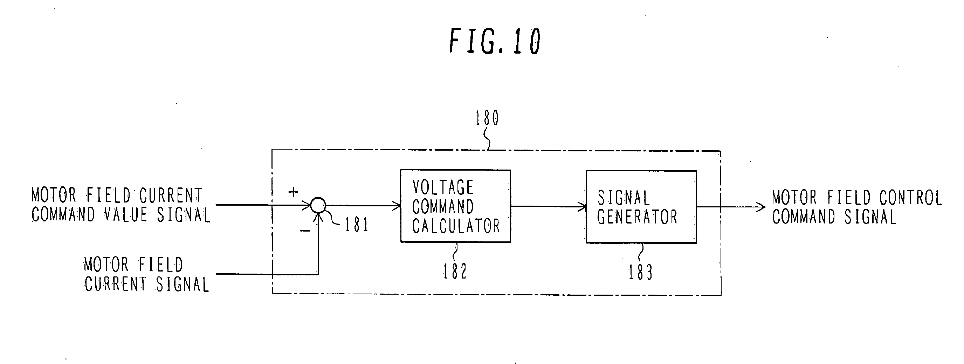

The motor field voltage controller 180, as shown in Fig. 10, inputs as input information the motor field current command value signal and the motor field current signal, performs an operation for controlling the field current of the motor 500, and outputs as output information the motor field control command signal to the chopper circuit 102. Therefore, the motor field voltage controller 180 includes a subtracter 181, a voltage command calculator 182, and a signal generator 183.

The subtracter 181 inputs as input information the motor field current command value signal and the motor field current signal. The subtracter 181 calculates the motor field current difference, i.e., a difference between the motor field current command value and the motor field current, and outputs as output information the motor field current difference signal to the voltage command calculator 182.

The voltage command calculator 182 is a proportional-integral operator which inputs as input information the motor field current difference signal. The voltage command calculator 182 calculates the motor field voltage command value by subjecting the motor field current difference to proportional-integral operation so that the motor field current coincides with the motor field current command value, and outputs as output information the motor field voltage command value signal to the signal generator 183.

The signal generator 183 inputs as input information the motor field voltage command value signal, calculates the motor field control command for controlling the drive of the chopper circuit 102 according to the motor field voltage command value, and outputs as output information the motor field control command signal (pulse waveform) to the chopper circuit 102.

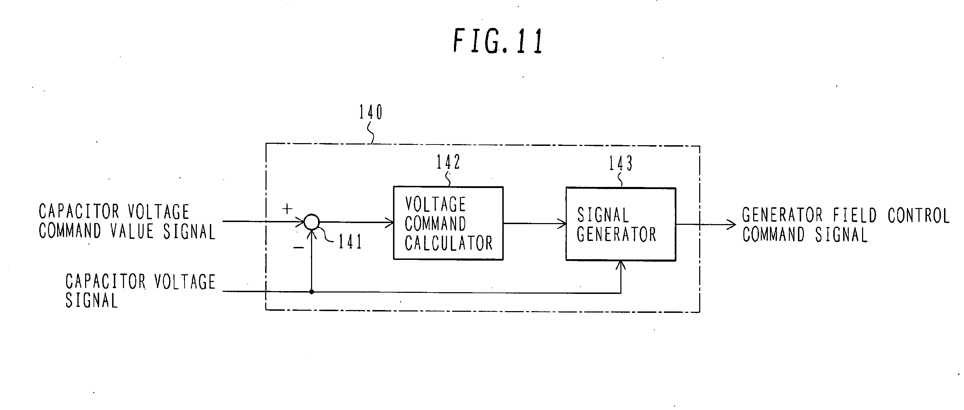

The power generation controller 140, as shown in Fig. 11, inputs as input information the capacitor voltage signal and the capacitor voltage command value signal. The power generation controller 140 performs an operation for controlling the field current to be supplied to the drive generator 200, and outputs as output information the generator field command signal to the voltage regulator 241 of the drive generator 200. Therefore, the power generation controller 140 includes a subtracter 141, a voltage command calculator 142, and a signal generator 143.

The subtracter 141 inputs as input information the capacitor voltage signal and the capacitor voltage command value signal, calculates the capacitor voltage difference, i.e., a difference between the capacitor voltage and the capacitor voltage command value, and outputs as output information the capacitor voltage difference signal to the voltage command calculator 142.

The voltage command calculator 142 is a proportional-integral operator which inputs as input information the capacitor voltage difference signal. The voltage command calculator 142 calculates the generator field voltage command value by subjecting the capacitor voltage difference to proportional-integral operation so that the capacitor voltage coincides with the capacitor voltage command value, and outputs as output information the generator field voltage command value signal to the signal generator 143.

The signal generator 143 inputs as input information the capacitor voltage signal and the generator field voltage command value signal. The signal generator 143 calculates the generator control command for controlling the drive of the voltage regulator 241 of the drive generator 200 according to the ratio of the generator field voltage command value to the capacitor voltage, and outputs as output information the generator control command signal (pulse waveform) to the voltage regulator 241 of the drive generator 200. Therefore, the field current of the drive generator 200 is controlled, and the generation energy necessary to generate the motive energy, Pm, of the motor 500 is outputted from the drive generator 200.

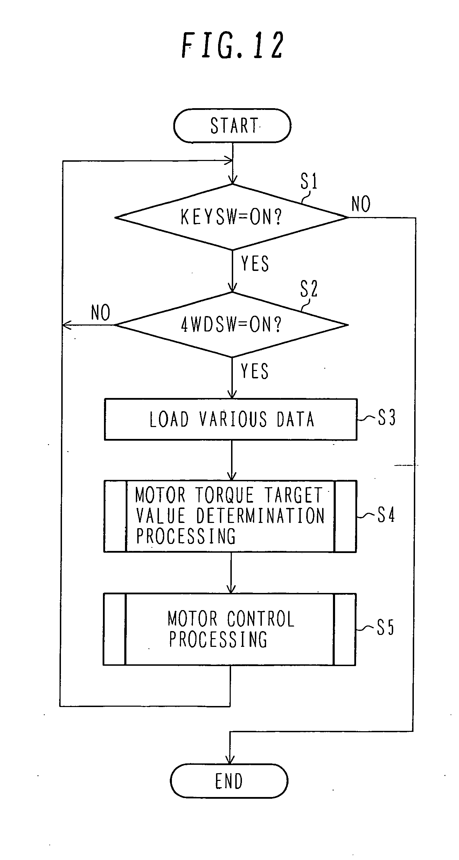

Then, a flow of four-wheel drive control including rollback speed limit control and vehicle operation under the control will be explained below with reference to Fig. 12 to 14.

First, an overall flow of four-wheel drive control processing explained below with reference to Fig. 12.

In four-wheel drive control processing, S1 is executed first. S1 determines whether the ignition key switch is ON (YES) or OFF (NO). When the engine 6 is started, the ignition key switch is turned ON, the power is supplied to the electronic circuit device 100, and the electronic circuit control unit 100 is activated. Then, failure check and other initial processing are performed and four-wheel drive control processing is started before determination is made.

When the result of the determination in S1 is NO, the processing returns to S1 to make determination of S1; otherwise (YES), the processing proceeds with S2.

S2 determines whether the four-wheel drive switch is ON (YES) or OFF (NO). The four-wheel drive switch (not shown), a selector switch provided in the vicinity of the driver's seat in the vehicle, is used to select two-wheel or four-wheel drive of the vehicle based on driver's operation.

When the result of the determination of S2 is NO, the processing returns to S1 to make determination of S1 and S2; otherwise (YES), the processing proceeds with S3.

S3, when four-wheel drive is selected for vehicle running, reads various pieces of data necessary to perform four-wheel drive control. As mentioned above with reference to Fig. 3 to 11, various pieces of data include information that indicates requests from the driver, operating statuses of the vehicle, operating statuses of each device forming the electric drive system, etc.

Then, the four-wheel drive control processing proceeds with S4.

S4 determines the operation mode based on various pieces of data read in S3 and then executes a loop of motor torque target value determination processing that determines the motor torque target value according to the determined operation mode. The motor torque target value determination processing is executed by the four-wheel drive control unit 110 to determine the motor torque target value for the determined operation mode based on each of the shift position, the accelerator opening, the skid status (YES/NO), and the wheel speed, as mentioned above with reference to Fig. 3. Then, S4 controls the clutch 600 and the relay 300 according to the determined operation mode.

Then, the four-wheel drive control processing proceeds with S5.

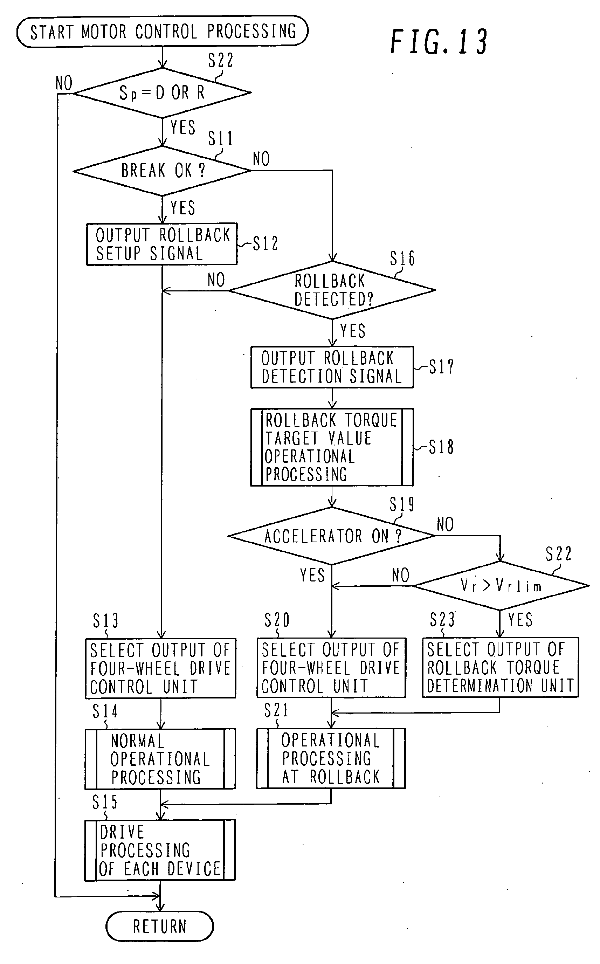

S5 performs processing for controlling the drive of the motor 500 according to the motor torque target value determined in S4 or the rollback torque target value calculated based on various pieces of data read in S3, following the procedures shown in Fig. 13, and outputs command signals including the generator field control command, the inverter control command, and the motor field control command. Accordingly, operations of each of the drive generator 200, the inverter unit 400, and the motor 500 are controlled and, eventually, the driving force in response to a request from the driver is transmitted from the motor 500 to the rear wheels 4.

When a series of processing from S1 to S5 is completed, the four-wheel drive control processing returns to S1 and then repeats a series of processing from S1 to S5. Then, when S1 determines that the ignition key switch is OFF (NO), the electronic circuit device 100 performs stop processing to stop operation.

Then, the motor control processing in S5 of Fig. 12 will be explained in detail below with reference to Fig. 13.

In accordance with the present embodiment, the rollback controller 150 is provided on a previous stage of the inverter controller 160 as mentioned above. Therefore, in motor control processing, rollback control processing is performed first to determine a final motor torque target value. Then, inverter control processing, motor field control processing, and generator field control processing are performed according to the determined final motor torque target value.

In motor control processing, S10 is executed first. S10 determines whether a shift position Sp is "D" or "R" (YES) or other positions (NO). Here, the rollback detector 151 recognizes the shift position Sp as a first condition for rollback detection.

When the result of the determination in S10 is NO, the motor control processing is terminated and the processing returns to the four-wheel drive control processing of the main loop; otherwise (YES), the processing proceeds with S11.

S11 determines whether the brake pedal is depressed (ON (YES)) or released (OFF (NO)). Here, the rollback detector 151 recognizes the brake ON/OFF status as a second condition for rollback detection.

When the result of the determination in S11 is YES, the processing proceeds with S12; otherwise (NO), the processing proceeds with S16.

S12 outputs the rollback setup signal. The rollback setup signal is outputted from the rollback detector 151 to the clutch controller 113 and the relay controller 114. Accordingly, the clutch 600 and the relay 300 turns ON in preparation for rollback after the brake pedal is released.

Then, the motor control processing proceeds with S13.

S13 selects either the motor torque target value outputted from the four-wheel drive control unit 110 or the rollback torque target value outputted from the torque determination unit 152 as a final motor torque target value. Here, since detection of rollback, the accelerator ON/OFF status, and the magnitude relation of the rollback speed with the rollback speed limit are not determined, the torque selector 153 unconditionally selects the motor torque target value outputted from the four-wheel drive control unit 110, and outputs as output information the selected motor torque target value to the inverter controller 160.

Then, the motor control processing proceeds with S14.

In S14, each of the power generation controller 140, the inverter controller 160, the capacitor voltage controller 170, and the motor field voltage controller 180 performs normal operational processing based on the motor torque target value outputted in S13 and various pieces of data read in S3, and outputs command signals to each of the voltage regulator 240, the inverter unit 400, and the chopper circuit 102. Here, since the rollback detection signal is not detected, the current command calculator 161 calculates the current command value based on the motor torque target value by use of the maps used for the normal four-wheel drive control.

Then, the motor control processing proceeds with S15.

S15 performs processing for driving the voltage regulator 240, the inverter unit 400, and the chopper circuit 102 based on the command signals calculated in S14 to control the armature current and the field current to be supplied to the motor 500, thereby controlling the drive of the motor 500.

On the other hand, S16 determines whether a rollback is detected or not. Here, the rollback detector 151 recognizes the rotational speed (rotational direction) of the motor 500 as a third condition for rollback detection. As a result, the rollback detector 151 determines the presence of rollback detection if either of AND conditions (rotational speed of motor 500 "negative", gearshift position "D", and brake "OFF") and (rotational speed of motor 500 "positive", gearshift position "R", and brake "OFF") is satisfied.

As a result of the determination in S16, when rollback detection is present (YES), the processing proceeds with S17; otherwise (NO), the processing proceeds with S13 to execute S13 to S15. Processing from S13 to S15 is as mentioned earlier.

S17 outputs the rollback detection signal in response to the result in S16. The rollback detection signal is outputted from the rollback detector 151 to the torque determination unit 152, the torque selector 153, and the current command calculator 161.

Then, the motor control processing proceeds with S18.

S18 performs operational processing of the rollback torque target value to calculate the rollback torque target value based on the rollback speed target value and the rollback speed. Here, the torque determination unit 152, driven by the rollback detection signal, calculates the rollback torque target value based on parallel control systems (the map-based control system and the feedback control system) as mentioned earlier with reference to Fig. 7.

Then, the motor control processing proceeds with S19.

S19 determines whether the accelerator pedal is depressed (ON) or released (OFF). Here, the condition for stopping the output of the rollback torque target value in the torque selector 153 is accelerator ON.

When the result of the determination in S19 is YES, the processing proceeds with S20; otherwise (NO), the processing proceeds with S22.

S20 selects either the motor torque target value outputted from the four-wheel drive control unit 110 or the rollback torque target value outputted from the torque determination unit 152 as a final motor torque target value. Here, although rollback detection is present, the accelerator is ON, and the magnitude relation of the rollback speed with the rollback speed limit is not determined. Therefore, the torque selector 153 selects the motor torque target value outputted from the four-wheel drive control unit 110, and outputs the selected motor torque target value to the inverter controller 160.

Then, the motor control processing proceeds with S21.

In S21, each of the power generation controller 140, the inverter controller 160, the capacitor voltage controller 170, and the motor field voltage controller 180 performs operational processing for rollback detection based on the motor torque target value outputted in S20 and various pieces of data read in S3, and outputs as output information command signals to each of the voltage regulator 240, the inverter unit 400, and the chopper circuit 102. Here, since the rollback detection signal is present, the current command calculator 161 calculates the current command value based on the motor torque target value by use of the maps used for rollback. As a result, it is possible to transmit the driving force of the motor 500 to the rear wheels 4 while the surplus energy from the drive generator 200 is added and the regenerative energy that the motor 500 will generate based on rollback is consumed as a loss energy of the motor 500.

Then, the motor control processing proceeds with S15 mentioned earlier.

On the other hand, S22 determines the magnitude relation between the rollback speed Vᵣ and a rollback speed limit Vᵣₗᵢₘ. Here, the condition for outputting the rollback torque target value in the torque selector 153 is a case where the rollback speed Vᵣ exceeds the rollback speed limit Vᵣₗᵢₘ.

When the result of the determination in S22 is YES (the rollback speed Vᵣ exceeds the rollback speed limit Vᵣₗᵢₘ), the processing proceeds with S23; otherwise (NO) (the rollback speed Vᵣ is equal to or smaller than the rollback speed limit Vᵣₗᵢₘ), the processing proceeds with S20 and then processing of S20, S21, and S15 is performed.

S23 selects either the motor torque target value outputted from the four-wheel drive control unit 110 or the rollback torque target value outputted from the torque determination unit 152 as a final motor torque target value. Here, since rollback detection is present, accelerator is ON, and the rollback speed Vᵣ exceeds the rollback speed limit Vᵣₗᵢₘ, the torque selector 153 selects the rollback torque target value outputted from the torque determination unit 152, and outputs the selected rollback torque target value to the inverter controller 160 as the motor torque target value. Accordingly, the rollback speed is limited by the driving force of the motor 500, with the rollback limit speed as a target speed recognized.

Then, the motor control processing proceeds with S21 mentioned earlier. Subsequently, processing of S21 and S15 is performed. After processing of S15 is completed, the motor control processing is terminated and the processing returns to the four-wheel drive control processing.

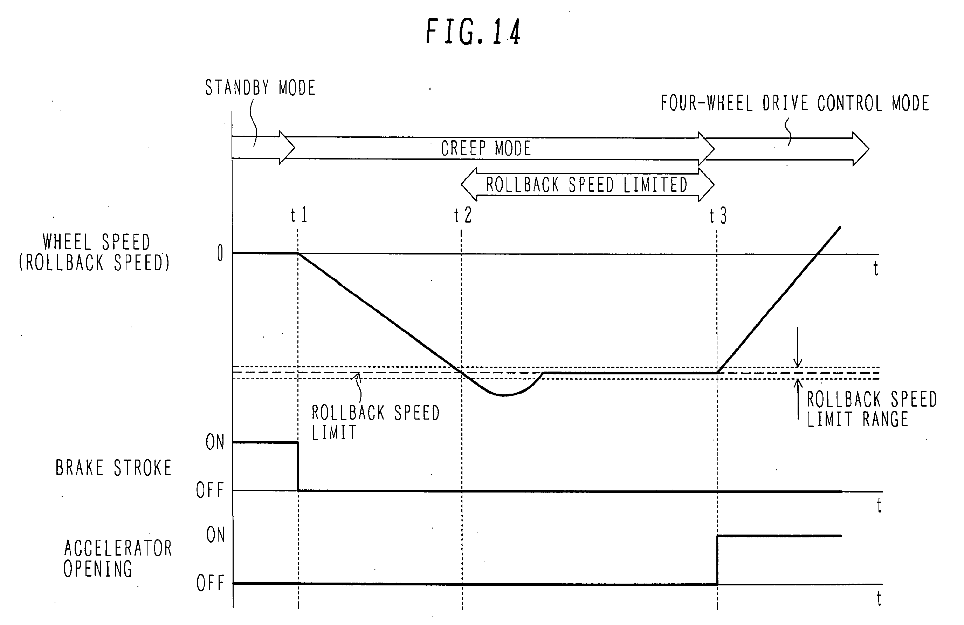

Operations of the vehicle during rollback speed limit control will be explained below with reference to Fig. 14.

Fig. 14 shows variations of the wheel speed (rollback speed), the brake stroke (ON/OFF), and the accelerator opening (vertical axis) (ON/OFF) in relation to passage of time t (horizontal axis), which are associated with each operation mode. Referring to Fig. 14, a broken line corresponding to the vertical axis denotes a preset rollback speed limit, and a range between the dotted lines denotes a rollback speed limit range. The dotted lines corresponding to the horizontal axis denote arbitrary time points (t1<t2<t3).

Initially, the vehicle is in the standby mode. At this time, the wheel speed is 0, the brake is ON, and the accelerator is OFF.

Then, when the brake is turned OFF at time t1, the vehicle assumes the creep mode. At this time, the running resistance is larger than the creep torque outputted from the engine 6 and the motor 500, and therefore the vehicle starts rolling back. Accordingly, the wheel speed becomes a negative speed from 0 and then acceleratively increases. In this state, the brake and the accelerator are OFF and the regenerative energy that the motor 500 will generate based on rollback is consumed as a loss energy of the motor 500 with surplus energy from the drive generator 200 added.

Then, at time t2, when the wheel speed (rollback speed) exceeds the rollback speed limit, the vehicle starts rollback speed limit processing. At this time, since the rollback torque target value is set as the motor torque target value, the wheel speed (rollback speed) converges toward the rollback speed limit, with the rollback speed limit as a target speed recognized. Then, after the wheel speed reaches the rollback speed limit, the wheel speed, while fine variations is repeated, with the rollback speed limit as a boundary line recognized, is retained within the rollback speed limit range that includes the rollback speed limit.

In Fig. 14, the waveform showing the wheel speed (rollback speed) retained within the rollback speed limit range is linearly illustrated to simplify the illustration. The actual waveform repeats fine variations because of the running resistance, etc., which are so small that the driver does not feel uncomfortable. Further, it may also be possible to control the rollback speed to a constant value so that fine variations do not occur.

Then, when the accelerator is turned ON at time t3, the vehicle suumes the four-wheel drive control mode. At this time, the motor torque target value according to the accelerator opening outputted from the four-wheel drive control unit 110 is set as a motor torque target value. Since this motor torque target value is larger than that for rollback speed limit control, the wheel speed (rollback speed) gradually increases from the rollback speed limit (negative speed) toward zero and then changes to a positive speed at a certain time point. That is, the vehicle is extricated from the rollback condition and advances in the traveling direction. At this time, since the rollback speed is retained within the rollback speed limit, it is possible for the vehicle to extricate from the rollback condition easily and promptly. Further, until the rollback speed reaches zero, the regenerative energy that the motor 500 will generate based on rollback is consumed as a loss energy of the motor 500 with the surplus energy from the drive generator 200 added. When the wheel speed exceeds zero, normal four-wheel drive control is selected.

Thus, with the electric drive system of the present embodiment providing rollback speed limit control, the rollback speed of the vehicle does not increase with increasing acceleration even on a steep slope and therefore it is possible to easily extricate the vehicle from the rollback condition to allow it to climb up the slope and improve starting characteristics of the vehicle on an upgrade, thereby further improving the vehicle running performance. Further, with the electric drive system of the present embodiment, regeneration by the motor 500 does not occur when the rollback speed is limited.

### Second Embodiment

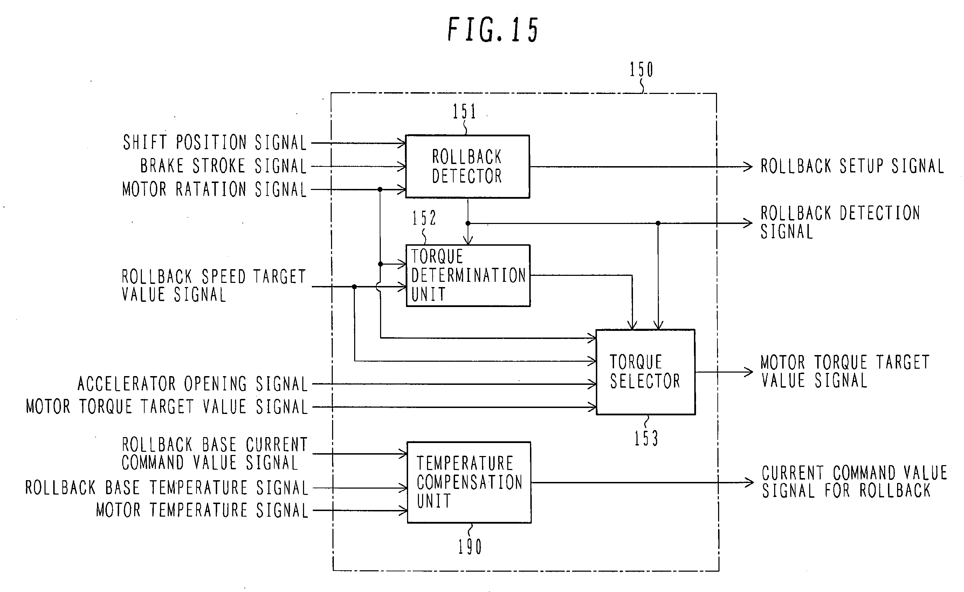

A second embodiment of the present invention will be explained blow with reference to Fig. 15.

The present embodiment is an improvement over the first embodiment. The present embodiment is characterized in that a temperature compensation unit 190 for performing compensation for the inverter controller 160 according to the temperature of the armature winding 511 of the motor 500 is provided in the rollback controller 150.

Other configurations are the same as those of the first embodiment and therefore not explained.

In accordance with the present embodiment, the regenerative energy that the motor 500 will generated based on rollback is consumed by making the loss energy (P1 = 3 x Armature current Ima² x Armature winding resistance R) of the motor 500 larger than that at the time of normal four-wheel drive control, like in the first embodiment. As shown in the formula, the magnitude of the loss of the motor 500 is proportional to the resistance of the armature winding 511 of the motor 500, and fluctuates according to the magnitude of the resistance of the armature winding 511. Therefore, when the vehicle is left for a prolonged period of time in a cold place (for example, in a parking lot in a skiing area) where the temperature is very low, the motor 500 gets cold and the temperature of the armature winding 511 falls. Accordingly, the resistance of the armature winding 511 decreases by just that much based on the temperature fall because of temperature characteristics thereof.

As mentioned with the first embodiment, when the vehicle rolls back, the motor control unit 120 calculates the current command value by use of the rollback current command value calculation map set under a certain temperature condition so that the loss of the motor 500 is increased and the regenerative energy that the motor 500 will generate is consumed, and controls the reactive component of the armature current of the motor 500 based on the current command value. However, in a condition where the temperature of the armature winding 511 falls and the resistance of the armature winding 511 decreases by just that much based on the temperature fall as mentioned above, the temperature of the armature winding 511 will fall below the temperature condition specified when the current command value calculation map is setup, resulting in the decreased loss of the motor 500. Accordingly, the regenerative energy that the motor 500 will generate may exceed the loss of the motor 500.

Hence, with the present embodiment, the temperature compensation unit 190 is provided in the rollback controller 150 as mentioned above, whereby the current command value for rollback (d-axis current command value) is controlled in response to fluctuations of the winding resistance R of the armature winding 511 caused by temperature change of the stator 510 so that the loss energy P1 associated with the current command value for rollback (d-axis current command value) calculated by the current command calculator 161 actually occurs in the motor 500. The q-axis current command value is maintained to the current command value for rollback calculated by the current command calculator 161, which makes it possible to minimize fluctuations of torque outputted from the motor 500.

The temperature compensation unit 190, as shown in Fig. 15, inputs as input information the motor temperature signal, the rollback base current command value signal, and the rollback base temperature signal, calculates the current command value for rollback based on these pieces of input information, and outputs as output information the current command value signal for rollback to the inverter controller 160 (subtracter 162). Calculations of the current command value for rollback will specifically be explained below. The temperature compensation unit 190 calculates the rollback base armature current based on the rollback base current command value (each of the d-axis and q-axis current command values), the rollback base winding resistance at the rollback base temperature based thereon, and the rollback base loss based on these pieces of operational information by use of the above-mentioned operational expression of the loss energy P1. Further, the temperature compensation unit 190 calculates the current winding resistance based on the motor temperature. Then, the temperature compensation unit 190 calculates back the armature current for rollback based on the winding resistance and the rollback base loss by use of the above-mentioned operational expression of the loss energy P1. Then, the temperature compensation unit 190 calculates back the current command value for rollback (d-axis current command value) based on the armature current for rollback and the rollback base current command value signal (q-axis current command value) by use of the operational expression of the armature current, i.e., an operational expression which finds the square root of the sum of the square of the d-axis current and the square of the q-axis current.

The motor temperature signal is an output signal of the temperature sensor provided in the stator 510 of the motor 500. The rollback base current command value signal is a current command value signal calculated and outputted by the current command calculator 161 at the time of rollback. The rollback base current command value signal denotes the d-axis current command value signal and the q-axis current command value signal. The rollback base temperature signal is a signal regarding memory information prestored in memory (not shown), the signal being the temperature of the stator 510 of the motor 500 at the time of setup of a rollback calculation map used for operations of the current command calculator 161 for rollback.

With the present embodiment, a case where the current command value for rollback by use of the above-mentioned operational expression of the loss energy P1 has been explained using an example. To calculate the current command value for rollback, it may be possible to use a calculation method that adjusts the rollback base current command value by fluctuations of the winding resistance R of the armature winding 511 caused by the temperature change so that the loss energy P1 of the motor 500 remains unchanged.

In accordance with the present embodiment, in a condition where the temperature of the armature winding 511 falls and the resistance of the armature winding 511 decreases by just that much based on the temperature fall, even if the temperature of the armature winding 511 falls below the temperature condition at the time of setup of the current command value calculation map and thereby the loss of the motor 500 decreases, it is possible to correct the loss so as to stably prevent regeneration from occurring, thereby allowing the vehicle to extricate from the rollback condition.

### Third Embodiment

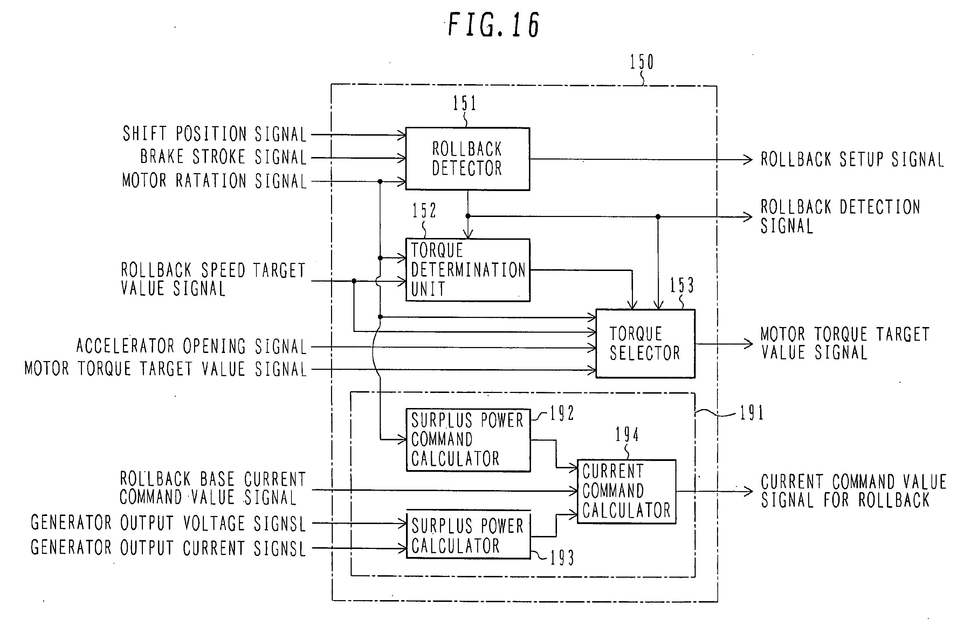

A third embodiment of the present invention will be explained below with reference to Fig. 16.

The present embodiment is an improvement over the first embodiment. The present embodiment is characterized in that a rollback current calculator 191 for calculating the current command value for rollback is provided in the rollback controller 150 so that surplus power supplied from the drive generator 200 coincides with the surplus power command value obtained through calculation for rollback.

Other configurations are the same as those of the first embodiment and therefore not explained.

With the temperature compensation method of the second embodiment, it is necessary to constantly obtain the rollback base loss in response to change of the operating point (torque, rotational speed) of the motor 500 and, further, command values are used for all calculations. Therefore, if a difference arises between the command value and the actual value, the regenerative energy may exceed the loss energy. Then, with the present embodiment, actual conditions are fed back so that the regenerative energy does not exceed the loss energy.

The rollback current calculator 191, as shown in Fig. 16, inputs as input information the generator output current signal, the generator output voltage signal, the rollback base current command value signal, and the motor rotation signal. The rollback current calculator 191 calculates the current command value for rollback (d-axis current command value) required for rollback based on these pieces of input information, and outputs as output information the current command value signal for rollback to the inverter controller 160 (subtracter 162). Therefore, the rollback current calculator 191 includes a surplus power command calculator 192, a surplus power calculator 193, and a current command calculator 194.

The surplus power command calculator 192 inputs as input information the motor rotation signal. The surplus power command calculator 192 calculates the surplus power command value according to the rollback speed obtained from the motor rotation by use of a map (data table) prestored in memory (not shown) and showing the relation between the surplus power command value and the rollback speed, and outputs as output information the surplus power command value signal to the current command calculator 194.

The surplus power calculator 193 inputs as input information the generator output current signal and the generator output voltage signal. The surplus power calculator 193 calculates the surplus power by subjecting the generator output current to accumulative operation and the generator output voltage, and outputs as output information the surplus power signal to the current command calculator 194. The generator output current signal and the generator output voltage signal are output signals of a sensor provided on the output side of the drive generator 200 or the voltage regulator 240.

The current command calculator 194 inputs as input information the rollback base current command value signal (d-axis current command value signal) outputted from the current command calculator 161 of the inverter controller 160, the surplus power signal, and the surplus power command value signal. The current command calculator 194 calculates the difference between the surplus power and the surplus power command value, calculates the current command value for rollback (d-axis current command value) by subjecting the difference to proportional-integral operation so that the surplus power coincides with the surplus power command value and adding the result obtained by the proportional-integral operation to the rollback base current command value signal (d-axis current command value), and outputs the current command value signal for rollback (d-axis current command value signal) to the inverter controller 160 (subtracter 162).

In accordance with the present embodiment, it is possible to constantly make the loss of the motor 500 larger than the regenerative energy that the motor 500 will generate to stably prevent regeneration from occurring, thereby allowing the vehicle to extricate from the rollback condition.

### Fourth Embodiment

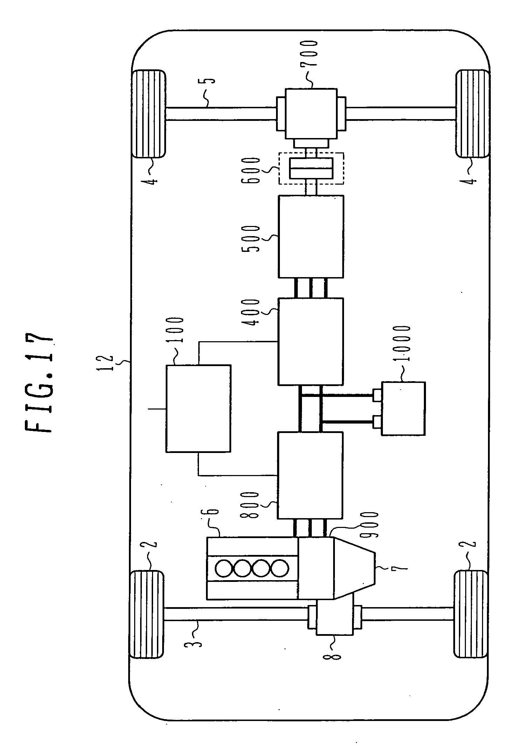

A fourth embodiment of the present invention will be explained below with reference to Fig. 17.

First, a configuration of the drive system of the four-wheel drive hybrid vehicle 12 of the present embodiment will be explained below with reference to Fig. 17.

The electric drive system which drives the rear wheels 4 has the same configuration as that of the first embodiment except a power supply for driving the motor 500. A motor drive battery 1000 is provided as the power supply for driving the motor 500. The motor drive battery 1000 is electrically connected to the DC (input) side of the inverter unit 400.

On the other hand, the drive system for driving the front wheels 2 is composed of a parallel-type hybrid drive system including an engine 6, and a motor generator 900 mechanically connected with the engine 6 through a clutch (not shown). The motor generator 900 is driven by the motor drive battery 1000. The motor drive battery 1000 is electrically connected to the DC (input) side of the inverter unit 800. The inverter unit 800 receives command signals from electronic circuit device 100, converts the DC power outputted from the motor drive battery 1000 to three-phase AC power, and supplies the three-phase AC power to the motor generator 900 to controls the drive of the motor generator 900. The motor generator 900 is a permanent magnet type rotary electric machine including a rotor having permanent magnets embedded in an iron core and a stator having three-phase stator coils with coil conductors wound around the iron core with concentrated winding or distributed winding. The parallel-type hybrid drive system enables independent drive by the motor generator 900 when the vehicle is running at low speeds, independent drive by the engine 6 when the vehicle is running at middle or high speeds, hybrid drive by the motor generator 900 and the engine 6 when the vehicle is running acceleratively or with high load.

With the present embodiment, the above has been explained using an example a case where the parallel-type hybrid drive system is applied wherein the motor generator 900 is directly connected with the crankshaft of the engine 6 through the clutch as a drive system for driving the front wheels 2. However, it may also be possible to adopt a drive system wherein the motor generator 900 is replaced with a motor generator mechanically connected with the crankshaft of the engine 6 through a belt, and the motor generator is used to start the engine 6, assist the drive during accelerative running, and generate power.

Further, with the present embodiment, a case where the control unit of the inverter unit 800 is provided in the electronic circuit device 100 has been explained using an example. However, it may also be possible to provide another electronic circuit device separately from the electronic circuit device 100 and provide the control unit therein.

The four-wheel drive hybrid vehicle 12 of the fourth embodiment rolls back on a steep slope as that in the first embodiment does. Therefore, the present embodiment incorporates a control logic for limiting the rollback speed in the control logic of the motor 500 which drives the rear wheels 4, like in the first embodiment. Accordingly, the four-wheel drive hybrid vehicle 12 of the present embodiment also makes it possible to accomplish the same effects as those of the first embodiment.

Further, with the present embodiment, it is possible to accumulate the electric power generated by the motor generator 900 into the motor drive battery 1000, as well as to drive the motor 500 by use of the power outputted from the motor drive battery 1000 as power supply. Therefore, with the present embodiment, when the four-wheel drive hybrid vehicle 12 rolls back, it is possible to accumulate the regenerative energy generated by the motor 500 into the motor drive battery 1000. Unlike the first embodiment, the present embodiment wastes no regenerative energy when rollback occurs.

Further, with the present embodiment, the electronic circuit device 100 supervises the accumulating condition of the motor drive battery 1000 based on the output information from the control unit (not shown) which controls the condition of the motor drive battery 1000. If the regenerative energy generated by the motor 500 cannot completely be collected into the motor drive battery 1000, the regenerative energy that the motor 500 will generate is consumed as a loss (copper loss) of the motor 500 like in the first embodiment. In this case, with the present embodiment, surplus power is supplied from the motor generator 900 or the motor drive battery 1000 so that the loss of the motor 500 is constantly larger than the regenerative energy that the motor 500 will generate. Accordingly, the four-wheel drive hybrid vehicle 12 of the present embodiment also makes it possible to accomplish the same effects as those of the first embodiment.

For the charging operation of the motor drive 1000, if a large current instantaneously flows in even when the motor drive battery 1000 is not in a fully charged condition or a condition close thereto, it may be determined in some cases that the motor drive battery 1000 has fully been charged. Also in such a case, means for consuming the regenerative energy that the motor 500 will generate as a loss of the motor 500 is effective as mentioned above. In a state where the vehicle may not move in the traveling direction even though the vehicle needs to start on a slippery slope or extricate from deep snow or mud, the driver depresses the accelerator pedal. As a result, the engine rotational speed and the torque command increase and regeneration occurs, and the regenerative energy is accumulated into the motor drive battery 1000. However, a current flowing into the motor drive battery 1000 comparatively increases and accordingly it may be judged to be impossible to accumulate the regenerative energy into the motor drive battery 1000. Therefore, the entire regenerative energy is not accumulated into the motor drive battery 1000, but the battery is charged while a part of the regenerative energy is consumed as a loss of the motor 500. This enables control such that the motor drive battery 1000 can efficiently be charged and discharged.

The above mentioned features and embodiments may be combined in any way, partly or as a whole.

## Claims

1. An electronic circuit device for a vehicle drive system, the drive system comprising a power converter (400) which controls power outputted from an in-vehicle power supply (10), and a motor (500) which receives the power controlled by the power converter (400) and generates force for driving wheels (4), wherein the electronic circuit device (100) inputs input signals including signals regarding a drive request from the driver and outputs command signals for controlling the operation of the power converter (400),
wherein the electronic circuit device (100) inputs a signal for detecting a condition where the vehicle (1) rolls back in the direction opposite the traveling direction;
generates a command signal so that driving power used for limiting the rollback speed is supplied from the power converter (400) to the motor (500) with the rollback limit speed as a target speed recognized, when a rollback speed detected from the input signal increases and then exceeds a rollback limit speed; and
outputs the generated command signal to the power converter (400).

2. The electronic circuit device according to Claim 1, wherein:
the command signal outputted when the rollback speed exceeds the rollback limit speed is generated such that the driving power used for limiting the rollback speed becomes larger than that before the rollback speed exceeds the rollback limit speed.

3. The electronic circuit device according to Claim 1 or 2, wherein:
the command signal outputted when the rollback speed exceeds the rollback limit speed is outputted during a period of time ranging since an input signal regarding a drive request from a driver is received until the drive request from the driver is detected.

4. The electronic circuit device according to at least one of Claims 1 to 3, wherein:
the command signal outputted when the rollback speed exceeds the rollback limit speed includes a command for making a loss of the motor (500) larger than a negative output of the motor (500).

5. The electronic circuit device according to at least one of Claims 1 to 4, wherein:
the electronic circuit device (100) inputs a signal regarding the temperature of the motor (500); and
changes the command for making a loss of the motor larger than the negative output of the motor (500), if temperature change of the motor is detected from the inputted signal.

6. The electronic circuit device according to at least one of Claims 1 to 5, wherein:
the electronic circuit device (100) inputs a signal regarding surplus power outputted from the in-vehicle power supply (10)) to the power converter (400) at the time of rollback; and
changes the command for making a loss of the motor (500) larger than the negative output of the motor (500) so that the surplus power obtained from the inputted signal coincides with the surplus power obtained from the rollback speed.

7. The electronic circuit device according at least one of Claims 1 to 6, comprising:
a controller (160) which outputs command signals for controlling the operation of the power converter (400) to the power converter;
a detector (151) for detecting the rollback of the vehicle (1); and
a determination unit which determines the driving force of the motor (500) when the rollback is detected by the detector (151) and the rollback speed exceeds the rollback limit speed;
wherein, when the rollback of the vehicle (1) is detected by the detector (151) and the rollback speed exceeds the rollback limit speed, the controller generates a command signal so that the driving power used for limiting the rollback speed is supplied from the power converter (400) to the motor (500), with the rollback limit speed as a target speed recognized; and
outputs the generated command signal to the power converter (400).

8. The electronic circuit device for vehicle drive system according to at least one of Claims 1 to 7, wherein:
the detector inputs signals regarding a gearshift position and a depression amount of a brake pedal; and
outputs a setup mode signal for making preparation for the rollback when the vehicle (1) is judged to be in the rollback condition from the inputted signals.

9. An electronic circuit device for a vehicle drive system, the drive system comprising a power converter (400) which controls power outputted from an in-vehicle power supply (10), and a motor (500) which receives the power controlled by the power converter (400) and generates force for driving wheels (2, 4), wherein the electronic circuit device (100) inputs input signals including signals regarding a drive request from the driver and outputs command signals for controlling the operation of the power converter (400),
wherein the electronic circuit device (100) has a setting of a rollback limit speed for performing control for limiting a roll back speed when the vehicle (1) rolls back in the direction opposite the traveling direction, and a setting of a rollback target speed for retaining the rollback speed to a rollback speed limit range through limit control of the rollback speed; and
wherein the electronic circuit device (100) inputs a signal for detecting a condition where the vehicle (1) rolls back in the direction opposite the traveling direction;
generates a command signal so that driving power used for maintaining the rollback condition and converging the rollback speed toward the rollback target speed so as to retain the rollback speed within the rollback speed limit range is supplied from the power converter (400) to the motor (500), when a rollback speed detected from the input signal increases and then exceeds the rollback limit speed; and
outputs the generated command signal to the power converter (400).

10. The electronic circuit device according to Claim 9, wherein:
the rollback target speed is set to the same value as the rollback limit speed.

11. The electronic circuit device according to Claim 9 or 10, wherein:
an absolute value of the rollback target speed is set to a value smaller than that of the rollback limit speed, the rollback being maintained therewith.

12. An electronic circuit device for a vehicle drive system, the drive system comprising a generator (200) which is driven by an internal combustion engine (6) that generates force for driving wheels (4), a power converter (400) which controls the power outputted from the generator (200), and a motor (500) which receives the power controlled by the power converter (400) and generates force for driving wheels (4) different from the wheels (2) driven by the internal combustion engine (6), wherein the electronic circuit device (100) inputs input signals including signals regarding a drive request from the driver and outputs command signals for controlling the operations of the generator (200) and the power converter (400),
wherein the electronic circuit device (100) inputs a signal for detecting a condition where the vehicle (1) rolls back in the direction opposite the traveling direction;
generates a command signal so that driving power used for limiting the rollback speed is supplied from the power converter (400) to the motor (500) with the rollback limit speed as a target speed recognized, when a rollback speed detected from the input signal increases and then exceeds a rollback limit speed;
outputs the generated command signal to the power converter (400), and generates the command signal so that the power generation output for generating the driving power is supplied from the generator to the power converter; and
outputs the generated command signal to the generator (200) .

13. An electronic circuit device for a vehicle drive system, the drive system comprising a generator (200) which is driven by an internal combustion engine (6) that generates force for driving wheels (4), a power converter (400) which controls the power outputted from the generator (200), and a motor (500) which receives the power controlled by the power converter and generates force for driving wheels (4) different from the wheels (2) driven by the internal combustion engine (6), wherein the electronic circuit device (100) inputs input signals including signals regarding a drive request from the driver and outputs command signals for controlling the operations of the generator (200) and the power converter (400),
wherein the electronic circuit device (100) has a setting of a rollback limit speed for performing control for limiting a roll back speed when the vehicle (1) rolls back in the direction opposite the traveling direction, and a setting of a rollback target speed for retaining the rollback speed to a rollback speed limit range through limit control of the rollback speed, and
wherein the electronic circuit device (100) inputs a signal for detecting a condition where the vehicle rolls back in the opposite direction of the traveling direction;
generates a command signal so that driving power used for maintaining the rollback condition and converging the rollback speed toward the rollback target speed so as to retain the rollback speed within the rollback speed limit range is supplied from the power converter (400) to the motor (500), when a rollback speed detected from the input signal increases and then exceeds the rollback limit speed;
outputs the generated command signal to the power converter (400), and generates a command signal so that the power generation output for generating the driving power is supplied from the generator (200) to the power converter (400); and
outputs the generated command signal to the generator (200) .

14. The electronic circuit device according to Claim 13, wherein:
the rollback target speed is set to the same value as the rollback limit speed.

15. The electronic circuit device according to Claim 13 or 14, wherein:
an absolute value of the rollback target speed is set to a value smaller than that of the rollback limit speed, the rollback being maintained therewith.

16. A vehicle drive system which forms a wheel drive system together with an internal combustion engine (6), vehicle drive system comprising:
a motor (500) which generates driving force transmitted to the wheels (4);
a power converter (400) which controls the power supplied from an in-vehicle power supply (10) and supplies the power to the motor (500); and
a control unit (160) which controls the operation of the power converter (400) to control the drive of the motor (500) ;
wherein, when the vehicle (1) rolls back in the direction opposite the traveling direction and the rollback speed exceeds the rollback limit speed, the control unit (160) controls the operation of the power converter (400) to control the drive of the motor (500) so that the rollback speed is controlled by the driving force of the motor with the rollback limit speed as a target speed recognized.

17. The vehicle drive system according to Claim 16, wherein:
the control unit (160) controls the operation of the power converter (400) to control an armature current of the motor (500) such that the driving force of the motor (500) used for controlling the rollback speed becomes larger than that before the rollback speed exceeds the rollback limit speed.

18. The vehicle drive system according to Claim 16 or 17, wherein:
the control unit continues the rollback speed control by the driving force of the motor (500) until the accelerator is depressed while the motor is receiving driving force according to the rollback from the wheels and rotating in reverse direction.

19. The vehicle drive system according to at least one of Claims 16 to 18, wherein:
the control unit (160) controls the operation of the power converter (400) to control the armature current of the motor such that a loss of the motor becomes larger than a negative output of the motor and the driving force used for controlling the rollback speed is generated in the motor.

20. The vehicle drive system according to at least one of Claims 16 to 19, wherein:
the control unit controls the operation of the power converter (400) according to change of the armature winding resistance of the motor (500) associated with change of the armature temperature of the motor, thereby controlling a reactive component of the armature current of the motor.

21. The vehicle drive system according to at least one of Claims 16 to 20, wherein:
the control unit controls the operation of the power converter (400) according to power outputted from the in-vehicle power supply (10) to the power converter as surplus power, thereby controlling the reactive component of the armature current of the motor.

22. A vehicle drive system which forms a wheel drive system together with an internal combustion engine (6), the vehicle drive system comprising:
a motor (500) which generates driving force transmitted to the wheels;
a power converter (400) which controls power supplied from an in-vehicle power supply and supplies the power to the motor; and
a control unit (160) which controls the operation of the power converter to control the drive of the motor;
wherein the control unit has a setting of a rollback limit speed for performing control for limiting a roll back speed when the vehicle rolls back in the direction opposite the traveling direction, and a setting of a rollback target speed for retaining the rollback speed to a rollback speed limit range through limit control of the rollback speed; and
wherein, when the rollback is detected and the rollback speed exceeds the rollback limit speed, the control unit controls the operation of the power converter (400) to control the drive of the motor (500) so that the rollback is maintained and the rollback speed is converged toward the rollback target speed so as to be retained within the rollback speed limit range.

23. The vehicle drive system according to Claim 22, wherein:
the rollback target speed equals the rollback limit speed.

24. The vehicle drive system for a vehicle drive system according to Claim 22 or 23, wherein:
the absolute value of the rollback target speed is smaller than that of the rollback limit speed, the rollback being maintained therewith.

25. A vehicle drive system comprising:
a generator (200) which is driven by an internal combustion engine (6) that generate force for driving wheels;
a power converter (400) which controls the power outputted from the generator;
a motor which receives the power controlled by the power converter (400) and generates force for driving wheels (4) different from the wheels (2) driven by the internal combustion engine (6); and
a control unit (160) which controls the operation of the power converter to control the drive of the motor (500);
wherein, when the vehicle rolls back in the direction opposite the traveling direction and the rollback speed exceeds the rollback limit speed, the control unit controls the operation of the power converter (400) to control the drive of the motor so that the rollback speed is controlled by the driving force of the motor, with the rollback limit speed as a target speed recognized, and controls the operation of the generator so that the power generation output for limiting the rollback speed is supplied from the generator (200) to the power converter.

26. A vehicle drive system comprising:
a generator which is driven by an internal combustion engine (6) that generate force for driving wheels;
a power converter (400) which controls the power outputted from the generator (200);
a motor (500) which receives the power controlled by the power converter and generates force for driving wheels (4) different from the wheels (2) driven by the internal combustion engine (6); and
a control unit (160) which controls the operation of the power converter (400) to control the drive of the motor;
wherein the control unit has a setting of a rollback limit speed for performing control for limiting a roll back speed when the vehicle rolls back in the direction opposite the traveling direction, and a setting of a rollback target speed for retaining the rollback speed to a rollback speed limit range through limit control of the rollback speed; and
wherein, when the rollback is detected and the rollback speed exceeds the rollback limit speed, the control unit controls the operation of the power converter (400) to control the drive of the motor so that the rollback is maintained and the rollback speed is converged toward the rollback target speed so as to be retained within the rollback speed limit range; and controls the operation of the generator (200) so that the power generation output for controlling the rollback speed is supplied from the generator to the power converter.

27. The vehicle drive system according to Claim 26,
wherein:
the rollback target speed equals the rollback limit speed.

28. The vehicle drive system according to Claim 26 or 27, wherein:
an absolute value of the rollback target speed is smaller than that of the rollback limit speed, the rollback being maintained therewith.
